# EUROPEAN PATENT APPLICATION

(11) **EP 4 429 151 A1**
(43) Date of publication of application: **11.09.2024**
(21) Application number: 22889280.8
(22) Date of filing: 01.11.2022
(51) Int. Cl.: H04L 5/00

(54) **RESOURCE CONFIGURATION METHOD AND APPARATUS, NETWORK DEVICE, AND TERMINAL DEVICE**

(30) Priority: 05.11.2021 CN 202111308795
(71) Applicant: Datang Mobile Communications Equipment Co., Ltd., Beijing 100085 (CN)
(72) Inventor: LUO, Chen, Beijing 100085 (CN); WANG, Jiaqing, Beijing 100085 (CN); YANG, Meiying, Beijing 100085 (CN); SU, Yuwan, Beijing 100085 (CN)
(74) Representative: Studio Torta S.p.A.
(86) International application number: PCT/CN2022/129054
(87) International publication number: WO 2023/078257

(57) **Abstract**

A resource configuration method and apparatus, a network device, and a terminal device are provided, and relate to the field of communication technologies. The method performed by a network device includes: sending configuration indication information and/or resource configuration information of a target reference signal to a terminal device in idle or inactive mode, by a SIB message; where the configuration indication information is configured to indicate a generation method of the resource configuration information of the target reference signal; the resource configuration information includes at least one of: a first parameter set applied to a single target reference signal resource; a second parameter set applied to each target reference signal resource in a target reference signal resource set; a third parameter set applied to each target reference signal resource in each target reference signal resource set in a target reference signal resource set group.

## Description

### CROSS-REFERENCE TO RELATED APPLICATION

This application claims priority to the Chinese patent application No. 202111308795.9 filed in China on November 5, 2021, a disclosure of which is incorporated herein by reference in its entirety.

### TECHNICAL FIELD

The present disclosure relates to the field of communication technologies, in particular, relates to a resource configuration method, a resource configuration apparatus, a network device, and a terminal device.

### BACKGROUND

Terminal energy-saving discussion in n Release 17 (Rel-17) agrees that a base station will configure Channel-State-Information Reference Signal (CSI-RS) resources for a terminal in a connected mode to a terminal in idle (Idle)/inactive (Inactive) state and for at least channel tracking functionality. Since end time of data transmission for user equipment (User Equipment, UE) in the connected mode is random, the CSI-RS resources notified by the base station to the terminal may frequently change. Once the CSI-RS resources change, the base station needs to reconfigure the resources through system messages. Frequently reading system messages by the terminal can lead to an increase in power consumption of the terminal. The energy-saving benefits brought by introducing the CSI-RS to the terminal in Idle/Inactive mode will be greatly reduced. In addition, an overhead of the system message is too high, which also increases the power consumption of reception of the terminal. More importantly, it brings a significant overhead to the base station side. Therefore, the parameter information of CSI-RS is configured for the terminal in Idle/inactive mode through System Information Block (SIB) messages.

If the parameter configuration of CSI-RS/tracking reference signal (Tracking Reference Signal, TRS) in the connected mode of the related art is fully reused, it will exceed the maximum carry information limit of SIB messages, which is 2976 bits (372 bytes). If the configured information exceeds the maximum carry information limit (the maximum number of carried information) of SIB messages, the SIB message will be further divided and transmitted through multiple physical downlink shared channels (Physical Downlink Shared Channel, PDSCH). SIB messages can be obtained by the terminal through receiving multiple PDSCHs, which increases the time required to obtain SIB messages. Once an error occurs in one of the SIB messages (with an error rate of 10%), more time is required, which can result in a higher latency and power consumption when the terminal receives the SIB messages.

### SUMMARY

Embodiments of the present disclosure provide a resource configuration method and apparatus, a network device, and a terminal device, to solve the problem of the related art that it is not able to achieve energy saving and reduce system overhead when configuring parameter information of reference signals for a terminal in Idle/inactive mode.

To resolve the aforementioned technical problem, the embodiments of the present disclosure provide a resource configuration method performed by a network device, including: sending configuration indication information and/or resource configuration information of a target reference signal to a terminal device in an idle mode or an inactive mode, by a system information block SIB message;
where the configuration indication information is configured to indicate a generation method of the resource configuration information of the target reference signal.

The resource configuration information includes at least one of the following:
a first parameter set applied to a single target reference signal resource; or a second parameter set applied to each target reference signal resource in a target reference signal resource set; or a third parameter set applied to each target reference signal resource in each target reference signal resource set in a target reference signal resource set group.

Optionally, the resource configuration information includes: configuration information generated using a first method; or configuration information generated using a second method.

Optionally, the configuration indication information is configured to indicate whether the resource configuration information is generated by the first method or the second method.

Optionally, when the resource configuration information is generated by using the first method, the resource configuration information satisfies one of the following:
there are simultaneously the first parameter set, the second parameter set and the third parameter set; or there are simultaneously the second parameter set and the third parameter set; or, there is only the first parameter set and/or there are simultaneously the second parameter set and the third parameter set.

Optionally, the target reference signal includes: channel-state-information reference signal CSI-RS.

Optionally, the CSI-RS is a channel tracking reference signal TRS.

Optionally, the first parameter set includes at least one of the following parameters: scrambling identification of the target reference signal; or a validity duration of the target reference signal based on layer-one signaling indication.

Optionally, the second parameter set includes at least one of the following parameters:
scrambling identification of the target reference signal; or periodicity and an offset value of the target reference signal; or quasi co-location QCL reference; or quantity of slots in which the target reference signal is located; or identification of the target reference signal resource set; or a validity duration of the target reference signal based on layer-one signaling indication.

Optionally, the quantity of slots in which the target reference signal is located satisfies at least one of the following:
occupying 0 to 2 bits; or being indicated through an explicit or implicit manner.

Optionally, the third parameter set includes at least one of the following parameters:
periodicity and an offset value of the target reference signal; or a value of frequency-domain starting resource block RB; or quantity of RBs occupied by the frequency domain; or a validity duration of the target reference signal based on layer-one signaling indication; or a quantity of slots in which the target reference signal is located; or a ratio of power of each resource element in a non-zero power target reference signal to power of each resource element in synchronization signal/physical broadcast channel block SS/PBCH block; or identification of the target reference signal resource set group.

Optionally, the validity duration of the target reference signal based on layer-one signaling indication satisfies at least one of the following:
a quantity of occupied bits is less than or equal to 4; or the maximum quantity is less than or equal to 16.

Optionally, the target reference signal resource set group satisfies at least one of the following: the maximum quantity is less than or equal to 6; or a quantity of bits occupied is less than or equal to 3.

Optionally, the target reference signal resource set satisfies at least one of the following: the maximum quantity is less than or equal to 128; or a quantity of bits occupied is less than or equal to 7.

Optionally, the target reference signal resource satisfies at least one of the following:
the maximum quantity is less than or equal to 89; or a quantity of bits occupied is less than or equal to 7.

Optionally, the method, further includes: sending receiving indication information to the terminal device, where the receiving indication information is configured to indicate whether the terminal device is receiving the target reference signal.

Optionally, sending the receiving indication information to the terminal device includes: determining layer-one signaling used for sending receiving indication information; sending the receiving indication information to the terminal device through the layer-one signaling.

Optionally, determining the layer-one signaling used for sending receiving indication information includes: determining the layer-one signaling used for sending receiving indication information through first information; where, the first information includes at least one of the following: terminal capability information; or second information.

Optionally, the second information includes:
indication information of a sending method, the indication information of the sending method is configured to indicate that at least one of paging early indication PEI and paging downlink control information DCI is used to send the receiving indication information to the terminal device.

Optionally, the terminal capability information refers to whether the terminal device supports an ability to detect the receiving indication information carried by at least one of PEI and paging DCI.

The embodiments of the present disclosure further provide a resource configuration method performed by a terminal device, including:
receiving configuration indication information and/or resource configuration information of a target reference signal sent by a network device through a system information block SIB message;
where, the configuration indication information is configured to indicate a generation method of the resource configuration information of the target reference signal;

The resource configuration information includes at least one of the following:
a first parameter set applied to a single target reference signal resource; a second parameter set applied to each target reference signal resource in a target reference signal resource set; or a third parameter set applied to each target reference signal resource in each target reference signal resource set in a target reference signal resource set group.

Optionally, the resource configuration information includes:
configuration information generated using a first method; or configuration information generated using a second method.

Optionally, the configuration indication information is configured to indicate whether the resource configuration information is generated by using the first method or the second method.

Optionally, when the resource configuration information is generated by using the first method, the resource configuration information satisfies one of the following:
there are simultaneously the first parameter set, the second parameter set, and the third parameter set; there are simultaneously the second parameter set and the third parameter set; or there is only the first parameter set and/or there are simultaneously the second parameter set and the third parameter set.

Optionally, the target reference signal includes: channel-state-information reference signal CSI-RS.

Optionally, the CSI-RS is a channel tracking reference signal TRS.

Optionally, the first parameter set includes at least one of the following parameters: scrambling identification of the target reference signal; or validity duration of the target reference signal based on layer-one signaling indication.

Optionally, the second parameter set includes at least one of the following parameters:
scrambling identification of the target reference signal; periodicity and an offset value of the target reference signal; quasi co-location QCL reference; quantity of slots in which the target reference signal is located; identification of the target reference signal resource set; or a validity duration of the target reference signal based on layer-one signaling indication.

Optionally, the quantity of slots in which the target reference signal is located satisfies at least one of the following:
occupying 0 to 2 bits; or being indicated through an explicit or implicit manner.

Optionally, the third parameter set includes at least one of the following parameters:
periodicity and an offset value of the target reference signal; a value of frequency-domain starting resource block RB; a quantity of RBs occupied by the frequency domain; a validity duration of the target reference signal based on layer-one signaling indication; or a quantity of slots in which the target reference signal is located; a ratio of power of each resource element in a non-zero power target reference signal to power of each resource element in synchronization signal/physical broadcast channel block SS/PBCH block; or identification of the target reference signal resource set group.

Optionally, the validity duration of the target reference signal based on layer-one signaling indication satisfies at least one of the following:
a quantity of occupied bits is less than or equal to 4; or the maximum quantity is less than or equal to 16.

Optionally, the target reference signal resource set group satisfies at least one of the following:
the maximum quantity is less than or equal to 6; or a quantity of bits occupied is less than or equal to 3.

Optionally, the target reference signal resource set satisfies at least one of the following: the maximum quantity is less than or equal to 128; or a quantity of bits occupied is less than or equal to 7.

Optionally, the target reference signal resource satisfies at least one of the following:
the maximum quantity is less than or equal to 89; or a quantity of bits occupied is less than or equal to 7.

Optionally, the method, further includes:
receiving, from the network device, receiving indication information, where the receiving indication information is configured to indicate whether the terminal device is receiving the target reference signal; where when the receiving indication information indicates the terminal device to receive the target reference signal, the target reference signal is received based on the resource configuration information of the target reference signal.

The embodiments of the present disclosure further provide a network device including a memory, a transceiver, and a processor. The memory is configured to store a computer program; the transceiver is configured to receive and send data under a control of the processor; the processor is configured to read the computer program in the memory and perform the following processes:
sending, through the transceiver, configuration indication information and/or resource configuration information of a target reference signal to a terminal device in an idle mode or an inactive mode by system information block SIB messages;
where the configuration indication information is configured to indicate a generation method of the resource configuration information of the target reference signal.

The resource configuration information includes at least one of the following:
a first parameter set applied to a single target reference signal resource; a second parameter set applied to each target reference signal resource in a target reference signal resource set; or a third parameter set applied to each target reference signal resource in each target reference signal resource set in a target reference signal resource set group.

Optionally, the resource configuration information includes:
configuration information generated using a first method; or configuration information generated using a second method.

Optionally, the configuration indication information is configured to indicate whether the resource configuration information is generated by the first method or the second method.

Optionally, when the resource configuration information is generated by using the first method, the resource configuration information satisfies one of the following:
there are simultaneously the first parameter set, the second parameter set and the third parameter set; or there are simultaneously the second parameter set and the third parameter set; or, there is only the first parameter set and/or there are simultaneously the second parameter set and the third parameter set.

Optionally, the target reference signal includes: channel-state-information reference signal CSI-RS.

Optionally, the CSI-RS is a channel tracking reference signal TRS.

Optionally, the first parameter set includes at least one of the following parameters: scrambling identification of the target reference signal; or validity duration of the target reference signal based on layer-one signaling indication.

Optionally, the second parameter set includes at least one of the following parameters: scrambling identification of the target reference signal; or periodicity and an offset value of the target reference signal; or quasi co-location QCL reference; or quantity of slots in which the target reference signal is located; or identification of the target reference signal resource set; or a validity duration of the target reference signal based on layer-one signaling indication.

Optionally, the quantity of slots in which the target reference signal is located satisfies at least one of the following:
occupying 0 to 2 bits; or being indicated through an explicit or implicit manner.

Optionally, the third parameter set includes at least one of the following parameters:
periodicity and an offset value of the target reference signal; or a value of frequency-domain starting resource block RB; or a quantity of RBs occupied by the frequency domain; or a validity duration of the target reference signal based on layer-one signaling indication; or a quantity of slots in which the target reference signal is located; or a ratio of power of each resource element in a non-zero power target reference signal to power of each resource element in synchronization signal/physical broadcast channel block SS/PBCH block; or identification of the target reference signal resource set group.

Optionally, the validity duration of the target reference signal based on layer-one signaling indication satisfies at least one of the following:
a quantity of occupied bits is less than or equal to 4; or the maximum quantity is less than or equal to 16.

Optionally, the target reference signal resource set group satisfies at least one of the following:
the maximum quantity is less than or equal to 6; or a quantity of bits occupied is less than or equal to 3.

Optionally, the target reference signal resource set satisfies at least one of the following: the maximum quantity is less than or equal to 128; or a quantity of bits occupied is less than or equal to 7.

Optionally, the target reference signal resource satisfies at least one of the following:
the maximum quantity is less than or equal to 89; or a quantity of bits occupied is less than or equal to 7.

Optionally, the processor is configured to read the computer program in the memory and perform the following operations:
sending receiving indication information to the terminal device through the transceiver, wherein the receiving indication information is configured to indicate whether the terminal device is receiving the target reference signal.

Optionally, the processor is configured to read the computer program in the memory and perform the following operations:
determining layer-one signaling used for sending the receiving indication information;
sending the receiving indication information to the terminal device through the layer-one signaling.

Optionally, the processor is configured to read the computer program in the memory and perform the following operations:
determining the layer-one signaling used for sending receiving indication information through first information; where, the first information includes at least one of the following: terminal capability information; or second information.

Optionally, the second information includes: indication information of a sending method, the indication information of the sending method is configured to indicate that at least one of paging early indication PEI and paging downlink control information DCI sends the receiving indication information to the terminal device

Optionally, the terminal capability information refers to whether the terminal device supports an ability to detect the receiving indication information carried by at least one of PEI and paging DCI.

The embodiments of the present disclosure further provide a terminal device including a memory, a transceiver, and a processor. The memory is configured to store a computer program; the transceiver is configured to receive and send data under a control of the processor; the processor is configured to read the computer program in the memory and perform the following processes:
receiving, through the transceiver, configuration indication information and/or resource configuration information of a target reference signal sent by a network device through a system information block SIB message;
where, the configuration indication information is configured to indicate a generation method of the resource configuration information of the target reference signal.

The resource configuration information includes at least one of the following:
a first parameter set applied to a single target reference signal resource; a second parameter set applied to each target reference signal resource in a target reference signal resource set; or a third parameter set applied to each target reference signal resource in each target reference signal resource set in a target reference signal resource set group.

Optionally, the resource configuration information includes:
configuration information generated using a first method; or configuration information generated using a second method.

Optionally, the configuration indication information is configured to indicate whether the resource configuration information is generated by using the first method or the second method.

Optionally, when the resource configuration information is generated by using the first method, the resource configuration information satisfies one of the following:
there are simultaneously the first parameter set, the second parameter set, and the third parameter set; there are simultaneously the second parameter set and the third parameter set; or there is only the first parameter set and/or there are simultaneously the second parameter set and the third parameter set.

Optionally, the target reference signal includes: channel-state-information reference signal CSI-RS.

Optionally, the CSI-RS is a channel tracking reference signal TRS.

Optionally, the first parameter set includes at least one of the following parameters: scrambling identification of the target reference signal; or a validity duration of the target reference signal based on layer-one signaling indication.

Optionally, the second parameter set includes at least one of the following parameters: scrambling identification of the target reference signal; periodicity and an offset value of the target reference signal; quasi co-location QCL reference; quantity of slots in which the target reference signal is located; identification of the target reference signal resource set; or validity duration of the target reference signal based on layer-one signaling indication.

Optionally, the quantity of slots in which the target reference signal is located satisfies at least one of the following:
occupying 0 to 2 bits; or being indicated through an explicit or implicit manner.

Optionally, the third parameter set includes at least one of the following parameters: periodicity and an offset value of the target reference signal; a value of frequency-domain starting resource block RB; a quantity of RBs occupied by the frequency domain; a validity duration of the target reference signal based on layer-one signaling indication; or a quantity of slots in which the target reference signal is located; a ratio of power of each resource element in a non-zero power target reference signal to power of each resource element in synchronization signal/physical broadcast channel block SS/PBCH block; or identification of the target reference signal resource set group.

Optionally, the validity duration of the target reference signal based on layer-one signaling indication satisfies at least one of the following:
a quantity of occupied bits is less than or equal to 4; or the maximum quantity is less than or equal to 16.

Optionally, the target reference signal resource set group satisfies at least one of the following:
the maximum quantity is less than or equal to 6; or a quantity of bits occupied is less than or equal to 3.

Optionally, the target reference signal resource set satisfies at least one of the following: the maximum quantity is less than or equal to 128; or a quantity of bits occupied is less than or equal to 7.

Optionally, the target reference signal resource satisfies at least one of the following:
the maximum quantity is less than or equal to 89; or a quantity of bits occupied is less than or equal to 7.

Optionally, the processor is configured to read the computer program in the memory and perform the following operations:
receiving, through the transceiver, receiving indication information sent by the network device, where the receiving indication information is configured to indicate whether the terminal device is to receive the target reference signal;
when the receiving indication information indicates the terminal device to receive the target reference signal, the target reference signal is received based on the resource configuration information of the target reference signal.

The embodiments of the present disclosure further provide a resource configuration apparatus applied to a network device, including:
a first sending unit, configured to send configuration indication information and/or resource configuration information of a target reference signal to a terminal device in an idle mode or an inactive mode, by a system information block SIB message;
where, the configuration indication information is configured to indicate a generation method of the resource configuration information of the target reference signal;

The resource configuration information includes at least one of the following:
a first parameter set applied to a single target reference signal resource; a second parameter set applied to each target reference signal resource in a target reference signal resource set; or a third parameter set applied to each target reference signal resource in each target reference signal resource set in a target reference signal resource set group.

The embodiments of the present disclosure further provide a resource configuration apparatus applied to a terminal device, the apparatus includes:
a first receiving unit, configured to receive configuration indication information and/or resource configuration information of a target reference signal sent by a network device through system information block SIB messages; where, the configuration indication information is configured to indicate a generation method of resource configuration information of the target reference signal.

The resource configuration information includes at least one of the following:
a first parameter set applied to a single target reference signal resource; or a second parameter set applied to each target reference signal resource in a target reference signal resource set; or a third parameter set applied to each target reference signal resource in each target reference signal resource set in a target reference signal resource set group.

The embodiments of the present disclosure further provide a processor-readable storage medium, where the processor-readable storage medium stores a computer program, and the computer program is configured to cause the processor to perform the abovementioned method.

The beneficial effects of the present disclosure are as follows.

The above solutions send configuration indication information and/or resource configuration information of a target reference signal to a terminal device in an idle mode or an inactive mode by using one or more SIB messages, so as to ensure energy saving and reduce system overhead when configuring resource configuration information of reference signals for the terminal device in an idle mode or an inactive mode.

### BRIEF DESCRIPTION OF THE DRAWINGS

In order to more clearly explain the technical solutions in the embodiments of the present disclosure or in the related art, the drawings that need to be used in the descriptions of the embodiments or the related art will be briefly described below. Obviously, the drawings in the following description are only some embodiments described in the present disclosure, and based on these drawings, those of ordinary skill in the art can obtain other drawings without creative effort.
Fig. 1 shows a structural diagram of a network system applicable to an embodiment of the present disclosure;
Fig. 2 shows a schematic diagram of a process of receiving a PO by UE;
Fig. 3 shows a schematic diagram of resource configuration parameters of CSI-RS in a connected mode;
Fig. 4 shows a flowchart of a resource configuration method applied to a network device according to embodiments of the present disclosure;
Fig. 5 shows a first schematic diagram of resource configuration information of TRS;
Fig. 6 shows a second schematic diagram of resource configuration information of TRS;
Fig. 7 shows a third schematic diagram of resource configuration information of TRS;
Fig. 8 shows a fourth schematic diagram of resource configuration information of TRS;
Fig. 9 shows a fifth schematic diagram of resource configuration information of TRS;
Fig. 10 shows a sixth schematic diagram of resource configuration information of TRS;
Fig. 11 shows a flowchart of a resource configuration method applied to a terminal device according to embodiments of the present disclosure;
Fig. 12 shows a unit diagram of the network device according to embodiments of the present disclosure;
Fig. 13 shows a structural diagram of the network device according to embodiments of the present disclosure;
Fig. 14 shows a unit diagram of the terminal device according to embodiments of the present disclosure;
Fig. 15 shows a structural diagram of the terminal device according to embodiments of the present disclosure.

### DETAILED DESCRIPTION

The technical solutions in the embodiments of the present disclosure will be described clearly and completely below with reference to the drawings in the embodiments of the present disclosure. Apparently, the described embodiments are part of the embodiments of the present disclosure, rather than all of embodiments. Based on the embodiments in the present disclosure, all other embodiments obtained by those ordinarily skilled in the art without paying creative efforts shall fall within the protection scope of the present disclosure.

Such terms as "first" and "second" in the specification and claims of the present disclosure are configured to distinguish similar objects, and are not necessarily configured to describe a specific order or sequence. It should be understood that the terms so used are interchangeable under appropriate circumstances such that the embodiments of the present disclosure described herein, for example, can be implemented in sequences other than those illustrated or described herein. Furthermore, the terms "comprising" and "having", as well as any variations thereof, are intended to cover a non-exclusive inclusion, for example, a process, method, system, product or device including a sequence of steps or elements is not necessarily limited to those steps or elements explicitly listed, but may include other steps or elements not explicitly listed or inherent to the process, method, product or device.

The term "and/or" in the embodiments of the present disclosure describes the association relationship of associated objects, indicating that there may be three relationships, for example, A and/or B, may mean such three cases: A exists alone, A and B exist simultaneously, and B exists alone. The character"/" generally indicates that the associated objects are in an "or" relationship. The term "plurality" in the embodiments of the present disclosure refers to two or more, and other quantifiers are similar.

In the embodiments of the present disclosure, words such as "exemplary" or "for example" are used as examples, illustrations or explanations. Any embodiment or design described as "exemplary" or "for example" in the embodiments of the present disclosure shall not be construed as being preferred or advantageous over other embodiments or designs. Exactly, the use of words such as "exemplary" or "such as" is intended to present related concepts in a concrete manner.

Embodiments of the present disclosure are described below with reference to the drawings. The resource configuration method, the resource configuration apparatus, the network device, and the terminal device provided by the embodiments of the present disclosure may be applied in a radio communication system. The radio communication system may be a system (hereinafter referred to as 5G system for short) adopting the fifth generation (5G) mobile communication technology, those skilled in the art can understand that the 5G NR system is only used as an example and not as a limitation.

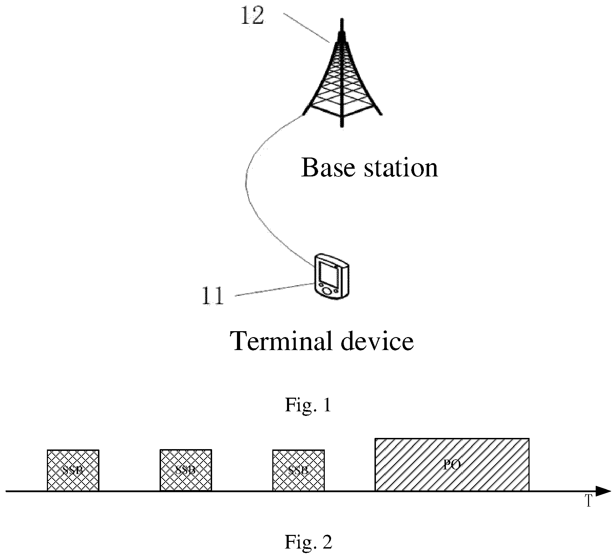

Referring to Fig. 1, Fig. 1 is a structural diagram of a network system applicable to an embodiment of the present disclosure. As shown in Fig. 1, it includes a user terminal 11 and a base station 12, where the user terminal 11 may be a user equipment (User Equipment, UE), for example: the user terminal 11 may be a mobile phone, a Tablet Personal Computer, a Laptop Computer, a personal digital assistant (referred to as PDA), a Mobile Internet Device (MID) or a wearable device and other terminal side devices. It should be noted that the specific type of the user terminal 11 is not limited in the embodiment of the present disclosure. The above-mentioned base station 12 may be a base station (for example, gNB, 5G NR NB) of 5G and later versions, or a base station in other communication system, or called Node B. It should be noted that, in the embodiment of the present disclosure, only the 5G base station is taken as an example, but the specific type of the base station 12 is not limited.

Firstly, some concepts related to the embodiments of the present disclosure will be explained as follows.

### 1. Paging process:

For New Radio (NR) systems, optimization of power saving and reception robustness in radio resource control IDLE (RRC_IDLE)/radio resource control Inactive (RRC_Inactive) mode is also important. For example, low complexity NR terminals, such as smart wearable devices or sensor devices mainly work in RRC_IDLE/RRC_Inactive mode, have stricter requirements for power saving than ordinary NR terminals. For user equipment (User equipment, UE) that work in RRC_IDLE/RRC_Inactive mode for a long time, UE will receive paging messages and system information (SI). Unlike Long Term Evolution (LTE) systems, NR terminals do not have a common reference signal (CRS) in RRC_IDLE/RRC_Inactive mode. Therefore, before receiving paging information at a corresponding paging occasion (PO), the terminal needs to first receive a synchronization signal block (SSB) to perform time/frequency tracking (T/F tracking) and Automatic Gain Control (AGC) operations to improve receiving performance of Paging messages (including Paging downlink control information (DCI) and Paging Physical Downlink Shared Channel (PDSCH)), as shown in Fig. 2. In order to achieve better T/F tracking performance, considering that Primary Synchronisation Signal, (PSS)/Secondary Synchronisation Signal (SSS) in SSB only occupy 12 Physical Resource Blocks (PRBs), in practice, especially in low signal-to-noise ratio situations, it often needs multiple (such as 3) SSBs to perform T/F tracking to improve synchronization accuracy, while the default cycle of SSBs in the idle mode is 20ms, so the terminal often need to wake up 60ms in advance to receive a SSB, which undoubtedly greatly increases the power consumption of the terminal. It is also noted that if the SSB is far from the PO, the accuracy of time/frequency tracking will to some extent deteriorate the receiving performance of paging messages. Additionally, the terminal cannot sleep and save power after receiving the SSB, which will also lead to an increase in power consumption of the terminal.

In addition to paging and SI, the forthcoming evolution of NR standards is considering an introduction of a multimedia broadcast multicast system similar to that in LTE. The multimedia broadcast multicast system sends periodically in RRC_idle mode and requires UE to first detect and schedule DCI. However, since the NR system in Stand Alone (SA) networking does not have the CRS of the LTE system, its channel tracking operation is similar to paging, which is also based on a SSB operation, so it has the same power consumption and reception accuracy issues as the paging operation. It should be further clarified that SI in NR includes a Master Information Block (MIB) and its System Information Blocks (SIBs). SIBs are divided into SIB1 and other system information (other SIB) (currently the NR protocol includes SIB2-SIB9), where SIB1 is also known as Remaining Minimum SI (RMSI).

### 2. CSI-RS configuration method in related art:

In Active Time, the base station configures various reference signals RSs (Reference Signal) for UE for channel quality measurement and beam management with various purposes. The RSs can include CSI-RS for tracking (i.e. CSI-RS for tracking, i.e. Tracking RS (TRS)), where the base station configures TRS resources for the terminal and the terminal uses the TRS configured by the base station to perform channel tracking operations. The RSs can also include CSI-RS (i.e. CSI-RS for mobility) for mobility measurement, where the terminal uses the CSI-RS for mobility configured by the base station to perform Radio Resource Management (RRM) measurement operations. The RSs may also include CSI-RSs for channel quality, measurement reporting, and beam management.

NR release 15 (i.e. Rel-15), release 16 (i.e. Rel-16) protocols only allow UE-exclusive CSI-RS resources to be configured for terminals in the RRC_connected mode through dedicated RRC signaling. The base station utilizes high-level signaling "CSI-ResourceConfig" and non-zero power CSI-RS resource set "NZP-CSI-RS-ResourceSet" to configure one or more NZP CSI-RS resource sets (up to 16 NZP CSI-RS resource sets in a CSI configuration) for terminals in the connected mode. Each resource set contains KsS 1 NZP CSI-RS resources (up to 64, 128 NZP CSI-RS resources in a resource set).

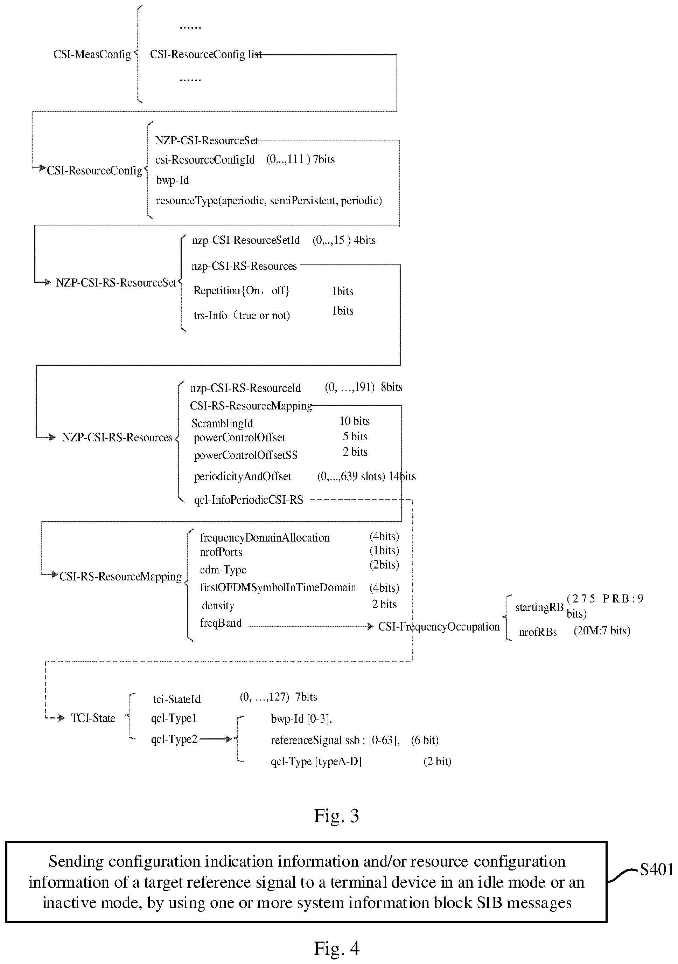

The high-level parameters related to CSI-RS resources including CSI measurement configuration (CSI-MeasConfig), CSI resource configuration (CSI-ResourceConfig), NZP-CSI-RS ResourceSet and non-zero power CSI-RS resource (NZP-CSI-RS resource), and the structure of NZP CSI-RS resources configured for UE, are shown in Fig. 3.

The specific meaning is:
Non-zero power CSI-RS resource ID (nzp-CSI-RS-ResourceId): CSI-RS resource configuration ID;
PeriodityAndOffset: periodicity and a slot offset value of periodic/semi-persistent CSI-RS; all CSI-RS resources in a CSI-RS resource set are configured with the same period, but the slot offset values of different CSI-RS resources can be the same or different;
resourceMapping: defining the quantity of ports, Code Division Multiplexing (CDM) type, Orthogonal Frequency Division Multiplex (OFDM) symbols, and subcarrier spacings of CSI-RS resources in a slot.

The parameters specifically includes:
H11: frequencyDomainAllocation: defining frequency domain resource allocation within a PRB.
H12: firstOFDMSymbolInTimeDomain: defining time domain resource allocation within a PRB.
H13: nrofPorts: defining the quantity of CSI-RS ports.
H14: density: defining a CSI-RS frequency domain density per PRB for each CSI-RS port, and whether CSI-RS is in odd or even digits when the CSI-RS frequency domain density is of a value 1/2.
H15: cdm-Type: defining a CDM value and pattern thereof.
H16: freqBand: defining the quantity of PRBs that span between a starting point and CSI-RS resources.
powerControlOffset: providing a ratio of PDSCH-EPRE to NZP CSI-RS-EPRE, with a range of [-8,15] dB and a step size of 1db when UE receives CSI feedback. powerControlOffsetSS: providing a ratio of NZP CSI-RS EPRE to SS/PBCH block EPRE. scramblingID: defining a 10 bit-long CSI-RS scrambling ID.
BWP-Id: defining a bandwidth part (BWP) where CSI-RS is located.
Repetition: associated with the CSI-RS resource set, the field can be set to ON/OFF. When being set to ON, the terminal can assume that the CSI-RS resources in the NZP CSI-RS resource set are transmitted using the same downlink spatial transmission filter. And only when the measurement quantity reportQuantity reported by the high-level parameters associated with all report settings linked to the CSI-RS resource set is set to "cri-RSRP", "cri-SINR" or "none", can the information field be configured.
qcl-InfoPeriodicCSI-RS: indicating a Quasi Co-Location (QCL) relationship with the CSI-RS resource, and including QCL source signals and corresponding QCL types.
trs-Info: indicating that antenna ports of all NZP-CSI-RSs in the CSI-RS resource set are the same, and are used for TRS for UE specific configuration.

For a CSI-RS resource set, all CSI-RS resources except for NZP CSI-RSs used for interference measurement have the same quantity of ports (nrofPorts) and frequency-domain density, and have the same starting position of Resource blocks (RBs), quantity of RBs, and the same CDM type.

If the trs-Info parameter is configured in the NZP CSI-RS resource set of UE, UE assumes that the antenna ports with the same port index for NZP CSI-RS resources configured in the NZP CSI-RS resource set are the same. For FR1, UE can be configured with one or more NZP CSI-RS sets, where one NZP CSI-RS resource set consists of four periodic NZP CSI-RS resources occupying two consecutive slots. Each slot contains two periodic NZP CSI-RS resources. For FR2, UE can also be configured with one or more NZP CSI-RS sets, where one NZP CSI-RS resource set can be composed of two periodic CSI-RS resources in one slot, or four periodic NZP CSI-RS resources in two consecutive slots. If the trs-Info is configured in the periodic NZP CSI-RS resource set, then UE does not need to be configured with CSI reporting configuration CSI ReportConfig. UE does not need to support the simultaneous configuration of trs-Info and replication in NZP CSI RS ResourceSet.

### 3. Reference signal design for UE in the idle mode

3GPP Rel-17 studies, from an energy-saving perspective, the UE in the RRC-Idle/inactive mode is configured with CSI-RSs at least for channel tracking (channel tracking)/AGC and other operations. For the UE in the RRC_IDLE/RRC_Inactive mode, the base station is not sure which cell the UE resides in, and there is no dedicated RRC signaling similar to that in the connected mode. Therefore, currently in the NR terminal energy-saving project, for UE in the idle mode, CSI-RS configuration is only based on system messages in principle, without any specific configuration plan.

For the idle UE, the latest progress of 3GPP introduces a paging early indication (Paging Early Indication, PEI) signal for paging messages. The PEI is sent before the paging, and if the terminal detects the PEI, it wakes up a receiver to receive the paging message, so the base station also needs to configure the PEI for the terminal in the idle mode. The method of configuring the PEI is similar to that for the CSI-RS, and there is a certain correlation.

Table 1 shows the CSI-RS resource information configured for UE in the connected mode and specific required bit indications, specifically:

**Table 1: correspondence between CSI-RS resource information configured for UE in the connected mode and specific required bit indication**

| Index | Configuration parameters | Bits number |
|---|---|---|
| 1 | Ratio of power to the power of each resource element in synchronization signal/physical broadcast channel block (SS/PBCH block) (powerControlOffsetSS): {-3, 0, 3, 6} dB | 2 |
| 2 | Scrambling ID: 0 to 1023 | 10 |
| 3 | First OFDM symbol in time domain (firstOFDMSymbolInTimeDomain): 0 to 9 | 4 |
| 4 | Value of frequency-domain starting resource block RB (startingRB): 0 to 274 | 9 |
| 5 | nrofRBs: 24 to 276 | 9 |
| 6 | Periodicity and offset value (periodicityAndOffset): {10, 20, 40, 80} ms | 12 |
| 7 | Frequency domain allocation for row1 with applicable values from {0, 1, 2, 3} to indicate the offset of the first RE to RE#0 in an RB (frequencyDomainAllocation for row1 with applicable values from {0, 1, 2, 3} to indicate the offset of the first RE to RE#0 in an RB) | 4 |
| 8 | QCL reference (QCL reference): an SSB index | FR2: Type D: 6+2=8 |
| | | FR1: Type C: 6+2=8 |
| 9 | Others: | |
| | CSI resource configuration ID (CSI-ResourceConfig ID): [0∼111] FFS | 7 |
| | TRS/CSI-RS resource set ID (TRS/CSI-RS resource set ID): [64] FFS | 4 |
| | | 1 |
| | Slot nuber: 1: FFS | 2 T= 20 cycles, [1 2 4 8]T |
| | Validity time: 2 | |

If CSI-RS/TRS is configured according to the UE in the connected mode, the required quantity of bits is:
1. in case of the parameters related to CSI-RS/TRS in all related art, including relevant parameters in others; for CSI-RS/TRS that occupies 1 symbol, each beam requires approximately 10 bytes, specifically, 2+10+4+9+9+12+4+8 × 2+7+4+1+2=80 bits.
   50+8×2+7+4+1+2=80bits=10 bytes. For a TRS with 64 beams configured with 4 symbols, it requires approximately 10 × 4 × 64=2560 bytes, which is much larger than the maximum carrying message of SIB messages of 372 bytes.
2. In case of all parameters related to CSI-RS/TRS in the related art which do not include relevant parameters in others, binding a SSB only requires 1 QCL information. For CSI-RS/TRS that occupies 1 symbol, each beam requires about 7 bytes, specifically 2+10+4+9+9+12+4+8=56bits=7 bytes. For a TRS with 64 beams configured with 4 symbols, it requires about 7×4×64=1790 bytes, which is much larger than the maximum carrying message of SIB messages of 372 bytes.

The embodiments of the present disclosure provide a resource configuration method, a resource configuration apparatus, a network device, and a terminal device, to solve the problem of the related art not being able to achieve energy saving and reduce system overhead when not configuring parameter information of reference signals for a terminal in Idle/inactive mode.

The method and the apparatus are based on the same application concept. As the principle of solving problems by the method or the apparatus is similar, the implementation of the apparatus and the method can refer to each other, and the repetition between the method and the apparatus will not be repeated.

As shown in Fig. 4, the embodiments of the present disclosure provide a resource configuration method performed by a network device. The method includes following steps.

Step S401, send configuration indication information and/or resource configuration information of a target reference signal to a terminal device in an idle mode or an inactive mode, by using system information block SIB messages.

The configuration indication information is configured to indicate a generation method of the resource configuration information of the target reference signal;

The resource configuration information includes at least one of the following:
A11. a first parameter set applied to a single target reference signal resource;
it can be understood that the first parameter set is exclusive to the target reference signal resource. A12. a second parameter set applied to each target reference signal resource in a target reference signal resource set;
it can be understood that the second parameter set is exclusive to the target reference signal resource set.
A13. a third parameter set applied to each target reference signal resource in a target reference signal resource set group;
it can be understood that the third parameter set is exclusive to the target reference signal resource set group.

It should be noted that the hierarchical relationship between A11-A13 mentioned above is: A11<A12<A13, where A11 is the smallest level of the parameter sets. From the hierarchical relationship, A11 can be attributed to A12 and/or A13.

Optionally, the target reference signal in the embodiments of the present disclosure includes: channel-state-information reference signals (CSI-RS), that is, A11 is the first parameter set applied to each CSI-RS resource, A12 is the second parameter set applied to each CSI-RS resource in a CSI-RS resource set, and A13 is the third parameter set applied to each CSI-RS resource set in a CSI-RS resource set group.

Optionally, the CSI-RS is a channel tracking reference signal (TRS), which is the resource configuration information of the TRS sent by the network device in this case. That is to say, when the terminal device receives such CSI-RS, it will use the CSI-RS for channel tracking.

It should be noted that the resource configuration information includes one of the following:
B11. configuration information generated using a first method;
it should be noted that the first method is a configuration information generation method dedicated to the target reference signal in an idle mode or an inactive mode;
B 12. configuration information generated using a second method;
it should be noted that the second method is a configuration information generation method of the target reference signal in the connected mode.

It should be noted that the configuration indication information is configured to indicate whether the resource configuration information is generated by the first method or the second method.

It should be noted that the configuration indication information occupies 0~N bits. Taking 1 bit as an example, the "0" value indicates that the resource configuration information of the target reference signal is generated using the second method, and the "1" value indicates that the resource configuration information of the target reference signal is generated by using the first method. Specifically, the generation method of configuration information in the idle mode is defined by a protocol. Taking 2 bits as an example, different values indicate different configuration methods. For example, "00" indicates that the configuration method is the first method, and "01" indicates that the configuration method is the second method.

Optionally, when the network device only sends configuration indication information, for example, the configuration indication information is configured to indicate that in a case where the resource configuration information is generated by the first method, the terminal device uses the resource configuration information generated by the first method, which is the B11 previously sent by the network device. For example, the configuration indication information is configured to indicate that in a case where the resource configuration information is generated by the second method, the terminal device uses by default the resource configuration information generated by the second method, which is the B12 previously sent by the network device.

It should be noted that when the network device only sends the configuration indication information in SIB messages, the system information overhead can be significantly reduced due to the fact that the configuration indication information occupies fewer bits.

Optionally, in a case where the terminal device only sends the resource configuration information, the resource configuration information can be B11 or B12, for example, the network device can use B11 or B12 by default.

That is to say, when the configuration indication information is the default, it can use by default the first method to generate configuration information or use the second method to generate configuration information.

Optionally, in a case where the terminal device simultaneously sends configuration indication information and resource configuration information, the generation method of the resource configuration information indicated by the configuration indication information is consistent with the actual generation method of the resource configuration information. That is to say, when the configuration indication information indicates that the resource configuration information adopts the first method, the resource configuration information is B11, and when the configuration indication information indicates that the resource configuration information adopts the second method, the resource configuration information is B 12.

It should also be noted that in the embodiments of the present disclosure, it is preferred that when the configuration information is generated by using the first method, the bits occupied by the resource configuration information will not exceed the maximum quantity of bits carried by the SIB messages, which is 2976 bits (372 bytes).

Furthermore, it should be noted that when the resource configuration information is generated by using the first method, the resource configuration information satisfies one of the following:
C11. there are simultaneously the first parameter set, the second parameter set and the third parameter set; that is to say, in this case, the network device needs to send these three parameter sets simultaneously, and at all times, the parameter sets sent by the network device are all these three;
C12. there are simultaneously the second parameter set and the third parameter set; that is to say,
in this case, the network device needs to send both types of parameter sets simultaneously, and at all times, the parameter sets sent by the network device are both of these types;
C13. there is only the first parameter set and/or there are simultaneously the second parameter set and the third parameter set; that is to say, in this case, the network device can choose to only send the first parameter set at one time instant, that is, use the first parameter set to independently configure a transmission resource of the target reference signal, and at another time instant, choose to send both the second parameter set and third parameter set simultaneously, that is, use the second parameter set and third parameter set to configure a transmission resource of the target reference signal.

The following is an explanation of these three parameter sets.
1. for the first parameter set, it includes at least one of the following parameters:
   D 11. scrambling identification of the target reference signal;
   For example, when the target reference signal is CSI-RS, the scrambling identification of the target reference signal is CSI-RS scrambling identification, for example, the CSI-RS scrambling identification is CSI-RS scrambling ID.

That is to say, in this case, a separate scrambling identification of the target reference signal is configured for each resource, and the values of the scrambling identification of the target reference signal for different resources are different.

D12. validity duration (Validity duration) of the target reference signal based on layer-one signaling indication;
That is to say, in this case, a separate validity duration is configured for each resource, and the values of the validity duration for different resources are different.

For example, in a case where the target reference signal is CSI-RS, the validity duration of the target reference signal based on layer-one signaling indication is the validity duration of CSI-RS based on layer-one signaling indication.

Specifically, the validity duration of the target reference signal based on layer-one signaling indication satisfies at least one of the following:
D121, the quantity of occupied bits is less than or equal to 4;
D122, the maximum quantity is less than or equal to 16.

It should be noted that the validity duration contains M selected values, each of values is [x(1), x(2), x(3), x(4), ... X(M)]× T. The T value can be a pre-configured parameter in the system or a value agreed upon in the protocol; it can be a common parameter for multiple users, or it can be a user-specific parameter. For example, T can be a multiple of the default discontinuous reception (Discontinuous Reception, DRX) cycle, such as T=10× DRX cycle, preferably M is less than or equal to 16 (i.e. M ≤ 16), not exceeding 4 bits, and more preferably, M=4; T can also be a pre-agreed value between the network and the terminal side.

2. for the second parameter set, it includes at least one of the following parameters:
D21, scrambling identification of the target reference signal;
That is to say, in this case, a separate scrambling identification of the target reference signal is configured for each resource set, and the values of the scrambling identification of the target reference signal for different resources in the same resource set are the same.

For example, when the target reference signal is CSI-RS, the scrambling identification of the target reference signal is CSI-RS scrambling identification.

D22. periodicity and an offset value of the target reference signal (periodicity AndOffset);
That is to say, in this case, a separate periodicityAndOffset is configured for each resource set, and the values of the periodicityAndOffset for different resources in the same resource set are the same.

For example, when the target reference signal is CSI-RS, the periodicity and offset value of the target reference signal is CSI periodicity and an offset value.

D23, quasi co-location (QCL) reference (QCL reference);
That is to say, in this case, a separate QCL reference is configured for each resource set, and the values of the QCL reference for different resources in the same resource set are the same.

D24, quantity of slots in which the target reference signal is located (Slot number);
That is to say, in this case, a separate Slot number is configured for each resource set, and the values of the Slot number for different resources in the same resource set are the same.

For example, when the target reference signal is CSI-RS, the quantity of slots in which the target reference signal is located is equal to the quantity of slots in which CSI-RS is located.

It should be noted that the quantity of slots in which the target reference signal is located satisfies at least one of the following:
D241. occupying 0 to 2 bits;
D242. being indicated through an explicit or implicit manner.

It should be noted that, preferably, the value of the quantity of slots is 0-1 bits.

D25. identification of the target reference signal resource set;
For example, the identification of the target reference signal resource set is a target reference signal resource set ID.

That is to say, in this case, a separate target reference signal resource set ID is configured for each resource set. The values of the target reference signal resource set ID for different resource sets are different, and the values of the target reference signal resource set ID for different resources in the same resource set are the same.

D26. validity duration of the target reference signal based on layer-one signaling indication;
That is to say, in this case, a separate validity duration is configured for each resource set, and the validity duration values of different resources in the same resource set are the same.

For example, when the target reference signal is CSI-RS, the validity duration of the target reference signal based on layer-one signaling indication is the validity duration of the CSI-RS based on layer-one signaling indication.

3. for the third parameter set, it includes at least one of the following parameters:
D31. periodicity and an offset value of the target reference signal;
That is to say, in this case, a separate periodicity and an offset value of the target reference signal is configured for each resource set group, and the values of the periodicity and an offset value of the target reference signal for different resources in the same resource set group are the same.

For example, when the target reference signal is CSI-RS, the periodicity and an offset value of the target reference signal is CSI-RS periodicity and offset value.

D32. value of frequency-domain starting resource block RB (startingRB);
That is to say, in this case, a separate startingRB is configured for each resource set group, and the startingRB values for different resources in the same resource set group are the same.

D33. quantity of RBs occupied by the frequency domain (nrofRBs);
That is to say, in this case, separate nrofRBs are configured for each resource set group, and the values of nrofRBs for different resources in the same resource set group are the same.

D34. validity duration of the target reference signal based on layer-one signaling indication;
That is to say, in this case, a separate validity duration is configured for each resource set group, and the validity duration values for different resources in the same resource set group are the same.

For example, when the target reference signal is CSI-RS, the validity duration of the target reference signal based on layer-one signaling indication is the validity duration of CSI-RS based on layer-one signaling indication.

D35. a ratio of a power of each resource element in the non-zero power target reference signal to a power of each resource element in the synchronization signal/physical broadcast channel block (SS/PBCH block) (powerControlOffsetSS);
That is to say, in this case, a separate powerControlOffsetSS is configured for each resource set group, and the values of powerControlOffsetSS for different resources in the same resource set group are the same.

For example, when the target reference signal is CSI-RS, the ratio of the power of each resource element in the non-zero power target reference signal to the power of each resource element in the SS/PBCH block is the ratio of the power of each resource element in the non-zero power CSI-RS to the power of each resource element in the SS/PBCH block.

D36. identification of target reference signal resource set group;
For example, the identification of target reference signal resource set group can be the identification of target reference signal resource set group.

That is to say, in this case, a separate identification of target reference signal resource set group is configured for each resource set group, and the values of the identification of target reference signal resource set group for different resources in the same resource set group are the same.

For example, when the target reference signal is CSI-RS, the identification of target reference signal resource set group is identification of CSI-RS resource set group.

D37. quantity of slots in which the target reference signal is located (Slot number);
That is to say, in this case, a separate Slot number is configured for each resource set group, and the values of the Slot number for different resources in the same resource set group are the same.

For example, when the target reference signal is CSI-RS, the quantity of slots in which the target reference signal is located is equal to the quantity of slots in which CSI-RS is located.

It should be noted that for any of the above parameters, such as the target reference signal scrambling ID, it cannot appear in different levels of parameter sets at the same time. For example, the scrambling ID of the target reference signal can appear in the first parameter set or the second parameter set, but cannot appear in both the first parameter set and second parameter set at the same time.

It should also be noted that, optionally, the target reference signal resource set group satisfies at least one of the following:
the maximum quantity of the target reference signal resource set groups is less than or equal to 6;
the quantity of bits occupied by the target reference signal resource set group is less than or equal to 3.

Optionally, the target reference signal resource set satisfies at least one of the following:
the maximum quantity of the target reference signal resource sets is less than or equal to 128;
the quantity of bits occupied by the target reference signal resource set is less than or equal to 7.

Preferably, the quantity of target reference signal resource sets in the embodiments of the present disclosure is 64.

Optionally, the target reference signal resource satisfies at least one of the following:
the maximum quantity of the target reference signal resources is less than or equal to 89;
the quantity of bits occupied by the target reference signal resource is less than or equal to 7.

It should be noted that the above constraints on the target reference signal resource set group, the target reference signal resource set, the target reference signal resource, the Validity duration, and the Slot number can ensure that the generated resource configuration information does not exceed the maximum number of bits carried by one SIB, which can avoid the problem that decoding multiple SIBs by a terminal leads to increased terminal power consumption and the base station side overhead, choosing the appropriate maximum value for each of the target reference signal resource set group, the target reference signal resource set, the target reference signal resource, the Validity duration, and the Slot number will further reduce signaling overhead.

Optionally, in the embodiments of the present disclosure, the method may further include: send receiving indication information to the terminal device, wherein the receiving indication information is configured to indicate whether the terminal device is to receive the target reference signal.

Optionally, the terminal device can determine whether to receive the target reference signal based on the receiving indication information. When the receiving indication information indicates the need for receiving the target reference signal, the terminal device can receive the target reference signal based on the resource configuration information of the target reference signal. When the target reference signal is the CSI-RS, the terminal device receives the CSI-RS for channel tracking and/or channel measurement.

That is to say, if the terminal device is indicated wit the CSI-RS, corresponding CSI-RS detection will be performed according to the resource configuration information of CSI-RS configured in the SIB messages. Otherwise, the terminal device does not need to undergo corresponding CSI-RS detection.

Optionally, sending the receiving indication information to the terminal device includes: determining layer-one signaling used for sending the receiving indication information;
sending the receiving indication information to the terminal device through the layer-one signaling.

It should be noted that the layer-one signaling in the embodiments of the present disclosure includes at least one of paging early indication (PEI) and paging downlink control information (DCI).

Optionally, the implementation of determining the layer-one signaling used for sending the receiving indication information mainly includes:
determining, through first information, the layer-one signaling used for sending the receiving indication information.

The first information includes at least one of the following: terminal capability information and second information.

Optionally, the terminal capability information can be pre-saved by the network device, or can be terminal capability information sent by the core network device and received by the network device. The terminal capability information refers to whether the terminal device supports the ability to detect the receiving indication information carried by at least one of PEI and paging DCI.

Optionally, the second information includes but is not limited to one of the following: indication information of a sending method, the indication information of the sending method is configured to indicate that at least one of the paging early indication PEI and paging downlink control information DCI is used to send the receiving indication information to the terminal device.

It should be noted that the terminal capability information can be explicitly carried receiving indication information of the target reference signal, or it can be version information of the terminal. For example, Rel-16 UE does not support Paging DCI carrying the receiving indication information of the CSI-RS by default, while UE after Rel-17 supports PEI and/or Paging DCI carrying the receiving indication information of CSI-RS.

It should also be noted that when the network device (such as a base station) indicates, based on the first information and/or terminal capability information sent by the core network device, that the terminal device can support receiving indication information of the CSI-RS carried by PEI carrying and carried by the Paging DCI, the network device determines to send the receiving indication information of the CSI-RS to the UE through PEI and/or Paging DCI. For example, when the UE is configured with a monitoring cycle of Paging, the UE needs to monitor. The base station side can indicate CSI-RS through Paging DCI, which can reduce the cost of PEI, improve the receiving performance of PEI, and increase the energy-saving gain of the terminal. Optionally, in order to ensure the reception performance of UE to CSI-RS, the base station can simultaneously send the receiving indication information of the CSI-RS on both PEI and Paging DCI. Optionally, when the base station sends PEI to the UE, it can simultaneously send the receiving indication information of the CSI-RS to avoid unnecessary receiving the CSI-RS by the UE.

Taking the communication between the base station and the terminal and the target reference signal being TRS, as an example, the specific explanation of the embodiments of the present disclosure in practical applications is as follows.

It should be noted that the following application situations only take TRS as an example, and the following applications also apply to cases where the target reference signal is other reference signals besides TRS. For cases where other reference signals are used, examples will not be provided in the embodiments of the present disclosure.

### Specific application situation 1

The base station configures at least one TRS resource set group for a terminal in idle/inactive mode, and indicates the at least one TRS resource set group through layer-one signaling.

Each TRS resource set group consists of one or more first parameter sets exclusive to TRS resources, one or more second parameter sets exclusive to TRS resource sets, and one or more third parameter sets exclusive to TRS resource set groups.

Note: The meaning of " exclusive to X " is that the parameter is common to the CSI-RS resource configuration within "X".

Optionally, when the quantity of SIBs configuring the resource configuration information of TRS by the base station does not exceed 2, following is included.

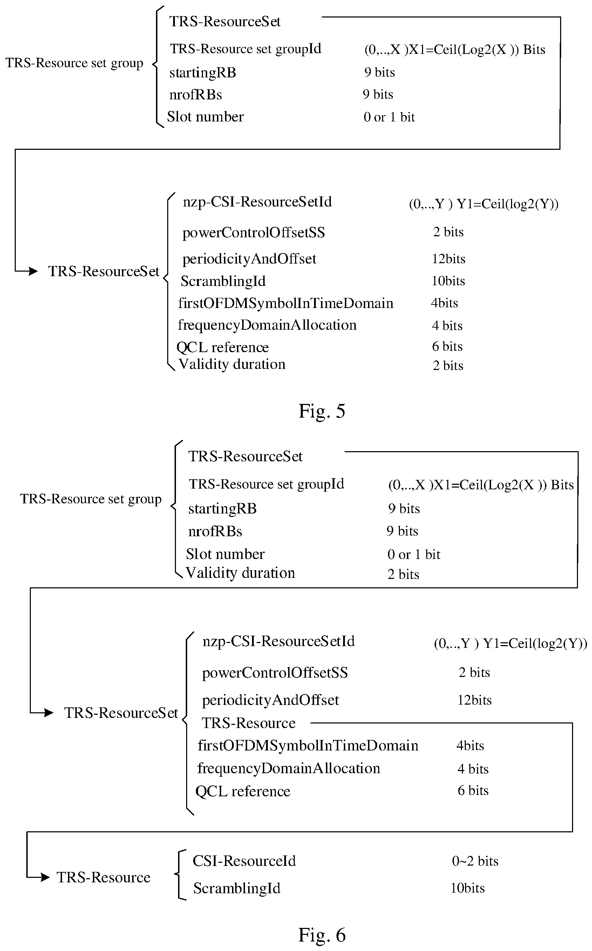

As shown in Fig. 6, the first parameter set exclusive to TRS resources includes at least: a CSI-RS scrambling ID and a CSI-RS scrambling ID.

As shown in Fig. 5, the second parameter set exclusive to a TRS resource set includes at least: a CSI-RS scrambling ID, a CSI-RS resource set ID, CSI-RS periodicity and offset value (periodicityAndOffset), ratio of NZP CSI-RS EPRE to SS/PBCH block EPRE (powerControlOffsetSS), QCL reference, and validity time.

The third parameter set exclusive to a TRS resource set group includes at least one of the following: Slot number, CSI-RS periodicity and offset value (periodicityAndOffset), frequency-domain starting RB value (startingRB), quantity of RBs occupied by the frequency domain (nrofRBs), validity duration of CSI-RS/TRS based on L1 signaling indication, ratio of NZP CSI-RS EPRE to SS/PBCH block EPRE (powerControlOffsetSS), and a CSI-RS resource set group ID.

Optionally, when the quantity of SIBs configuring the resource configuration information of TRS by the base station does not exceed 1, the quantity of TRS resource sets does not exceed the preset value of 16, following is included.

Example of configuring the slot number: for the time domain information of the TRS resource set, for example, when configuration is the same as that of TRS in the connected mode, the position of time-domain symbol resources occupied in time domain is specified as occupying a total of four symbols in two consecutive slots by TRS in FR1. The symbol position in each slot is as follows. In FR2, TRS can occupy one slot, totaling two symbols, or two consecutive slots, totaling four symbols. The specific position of symbols in each slot is:
For FR1 and FR2: *l* ∈ {4,8}, *l* ∈ {5,9} or *l* ∈ {6,10},
For FR2: *l* ∈ {0,4}, *l* ∈ {1,5}, *l* ∈ {2,6}, *l* ∈ {3,7}, *l* ∈ {7,11}, *l* ∈ {8,12} or *l* ∈ {9,13}.

For two consecutive slots, each slot corresponds to the same TRS symbol position.

Therefore, the time-domain information of the TRS resource set can configure a parameter exclusive to a TRS resource, that is, a time domain position of the first symbol firstOFDMSymbolInTimeDomain, and/or a second parameter exclusive to a TRS resource set, that is, the Slot number, to obtain 2 or 4 CSI-RS time-domain resources. "Slot number" can be indicated explicitly or implicitly, through 0-2 bits, specifically:
Explicit indication: 0-2 bits. For example: 1 bit: "0" represents 1 slot, "1" represents 2 slots. Optionally, 2 bits: decimal "1" indicates 1 slot, and "2" indicates 2 slots. Optionally, bit mapping to 2 slots, "10" indicates 1 slot and "01" indicates 2 slots.

For example, if the UE is configured with the FR2 frequency band, the quantity of symbols occupied by TRS can be indicated by 1 bit, specifically as: 1 slot or 2 slots.

Implicit indication: If the UE is configured with the FR1 frequency band, the TRS configured with 2 slots does not need an explicit configuration.

The indication method for the quantity of Slots and the position of the first symbol is also applicable to the indication method for reference signals with a fixed symbol pattern or a slot pattern.

For example, if the quantity of SIBs configuring the resource configuration information of TRS by the base station does not exceed 1, the specific configuration method for CSI-RS/TRS is as follows:

As shown in Fig. 5, in this case:
1. When the base station can configure up to 1 TRS Resource set group, that is, the base station only needs 1-bit L1 signaling to indicate whether the terminal receives the TRS, the TRS-Resource set group ID does not need to be indicated, that is, 0 bits. Each TRS-Resource set group supports 64 TRS-Resource sets, which can indicate up to 64 beams through 6 bits, and the slot number is indicated in the explicit indication, which is 1 bit of indication. SIB messages need to carry 9+9+1+(6+2+12+10+4+4+6+2) × 64 × 1=2963 bits<2976 bits.
2. When the base station can configure up to 6 TRS Resource set groups, that is, the base station needs the L1 signaling to indicate a maximum of 6 TRS Resource set groups, then the TRS Resource set group ID needs to be indicated by 3 bits. In this way, each TRS Resource set group can support up to 11 TRS Resource sets, indicated through 4 bits. Part of the TRS Resource sets can also be configured through 4 bits of indications. The slot number is indicated by the explicit indication, which is 1 bit of indication. SIB messages need to carry 3+9+9+1+(4+2+12+10+4+4+6+2) × 11 × 6=2926 bits<2976 bits.

Optionally, the following configuration methods can also be included:
The TRS resource ID information field in the third parameter set is optional, occupying 0-2 bits. For example, if the quantity of slots in FR1 or FR2 clearly indicates the quantity of resources, the TRS resource ID information field can be a default or configured specifically.

As shown in Fig. 6, the resource configuration information of TRS in this situation is as follows:
1. When the base station can configure up to 1 TRS-Resource set group, that is, the base station only needs 1-bit L1 signaling to indicate whether the terminal receives TRS, and the TRS Resource set group ID does not need to be indicated, that is, 0 bit.
2. When the CSI ResourceId information field is the default, each TRS Resource set group supports up to 39 TRS Resource sets, and up to 39 beams can be indicated through 6 bits. The slot number is indicated through the explicit indication which is 1 bit of indication. In this case, the SIB messages need to carry 9+9+1+2+(6+2+12+4+4+6+10 × 4) × 39 × 1=2907 bits<2976 bits.
3. When the TRS resource ID information field is 2 bits, each TRS Resource set group supports up to 39 TRS Resource sets, and up to 36 beams can be indicated through 6 bits. In this case, the SIB messages need to carry 9+9+1+2+(6+2+12+4+4+6+12 × 4) × 36 × 1=2973 bits<2976 bits.
4. When the base station can configure up to 6 TRS Resource set groups, that is, the base station needs L1 signaling to indicate a maximum of 6 TRS Resource set groups, then the TRS Resource set group ID needs to be indicated by 3 bits.
5. When the TRS resource ID information field is the default, each TRS Resource set group supports a maximum of 6 TRS Resource sets which are indicated through 3 bits, and part of the TRS Resource sets can also be configured. The slot number is indicated through the explicit indication which is 1 bit of indication. The SIB messages need to carry 3+9+9+1+2+(3+2+12+4+4+6+10 × 4) × 6 × 6=2580 bits<2976 bits.
6. When the TRS resource ID information field is 2 bits, each TRS Resource set group supports a maximum of 6 TRS Resource sets which are indicated through 3 bits, and part of the TRS Resource sets can also be configured. The slot number is indicated through the explicit indication which is 1 bit of indication. The SIB messages need to carry 3+9+9+1+2+(3+2+12+4+4+6+12 × 4) × 6 × 6=2976 bits=2976 bits.

It should be noted that the beneficial effect of the application situation is that configuring TRS for the terminal in idle/inactive mode, which can accurately indicate TRS information when no more than 2 SIB messages carry the resource configuration information of the TRS.

### Specific application situation 2

The base station configures at least one TRS resource set group for a terminal in idle/inactive mode, and indicates at least one TRS resource set group through layer-one signaling.

Each TRS resource set group consists of a second parameter set exclusive to one or more TRS resource sets.

Specifically, the second parameter set exclusive to the one or more TRS resource sets includes at least one of the following: CSI-RS scrambling ID, Slot number, CSI-RS resource set ID, CSI-RS periodicity and offset value (periodicityAndOffset), QCL reference;
The third parameter set exclusive to the one or more TRS resource set groups includes at least one of the following: startingRB, nrofRBs, Validity time, Slot number, CSI-RS resource set group ID, CSI-RS periodicity and offset value (periodicityAndOffset).

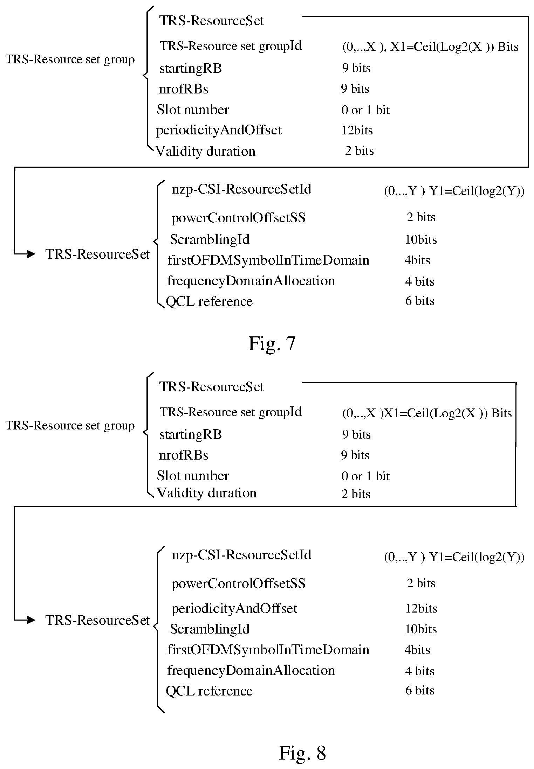

As shown in Fig. 7, the resource configuration information of the TRS in this situation is as follows:
1. When the base station can configure up to 1 TRS Resource set group, that is, the base station only needs 1-bit L1 signaling to indicate whether the terminal receives TRS, the TRS Resource set group ID does not need to be indicated, that is, 0 bits. Each TRS Resource set group supports 89 TRS Resource sets, which can indicate up to 89 beams through 7 bits, and the slot number is indicated through the explicit indication which is 1 bit of indication. Here, the periodicity and validity time of all TRS are the same. The SIB message needs to carry 9+9+1+12+2+(7+2+10+4+4+6) × 89 × 1=2970 bits<2976 bits.
2. When the base station can configure up to 6 TRS Resource set groups, that is, the base station needs L1 signaling to indicate a maximum of 6 TRS Resource set groups, then the TRS Resource set group IDs need to be indicated by 3 bits. In this way, each TRS Resource set group can support a maximum of 16 TRS Resource sets which are indicated through 4 bits, and part of the TRS Resource sets can also be configured. The slot number is indicated through the explicit indication, which is 1 bit of indication. Here, the periodicity and validity time of all TRS are the same. The SIB message needs to carry 3+9+9+1+12+2+(4+2+10+4+4+6) × 16 × 6=2916 bits<2976 bits.

As shown in Fig. 8, another resource configuration information of TRS in this case is specifically:
1. When the base station can configure up to 1 TRS Resource set group, that is, the base station only needs 1-bit L1 signaling to indicate whether the terminal receives TRS, and the TRS Resource set group ID does not need to be indicated, that is, 0 bit. Each TRS Resource set group supports a maximum of 65 TRS Resource sets, which can indicate up to 65 beams through 7 bits. The slot number is indicated through the explicit indication, which is 1 bit of indication. The SIB message needs to carry 9+9+1+2+(7+2+12+10+4+4+6) × 65 × 1=2946 bits<2976 bits.

When the second resource set only has CSI-RS scrambling ID and QCL reference, the slot number is 0 bit. Each TRS Resource set group supports up to 128 TRS Resource sets, and can indicate up to 128 beams through 7 bits. The SIB message needs to carry 9+9+2+(7+10+6) × 128 × 1=2964 bits<2976 bits.

2. When the base station can configure up to 6 TRS Resource set groups, that is, the base station needs L1 signaling to indicate a maximum of 6 TRS Resource set groups, then the TRS Resource set group IDs need to be indicated by 3 bits. In this way, each TRS Resource set group can support a maximum of 11 TRS Resource sets which are indicated through 4 bits, and part of the TRS Resource sets can also be configured. The slot number is indicated through the explicit indication, which is 1 bit of indication. The SIB message needs to carry 3+9+9+1+2+(4+2+12+10+4+4+6) × 11 × 6=2796 bits<2976 bits.

It should be noted that the beneficial effect of the application situation is that configuring TRS for the terminal in idle/inactive mode can be controlled within one SIB message, avoiding the generation method of resource configuration information for TRS applied in the connected mode exceeding the limit of data carried by the SIB message, and accurately indicating information of TRS.

### Specific application situation 3

The base station configures at least one TRS resource set group for the terminal in idle/inactive mode, and indicates at least one TRS resource set group through layer-one signaling.

The base station independently configures each TRS resource set group through the first parameter set exclusive to TRS resources, that is, each TRS resource set group only contains a first parameter set exclusive to one or more TRS resources, or, configures the sending resources corresponding to the TRS resource set group by simultaneously configuring the second parameter set exclusive to one or more TRS resource sets and the third parameter set exclusive to one or more TRS resource set groups.

Note: only one of two methods mentioned here can be configured on the base station side, but both methods cannot be used at the same time.

For configuring each TRS resource set group independently by the first parameter set exclusive to TRS resources, the first parameter set should at least include: CSI-RS scrambling ID, CSI-RS resource ID, QCL reference, CSI-RS periodicity and offset value (periodicityAndOffset), startingRB, nrofRBs, Validity time, Slot number, and powerControlOffsetSS.

It should be noted that the CSI-RS ResourceId information field in the third parameter set is optional. For example, 0-2 bits. When the slot number in FR1 or FR2 clearly indicates the number of resources, the CSI-ResourceId information field can be the default or be configured specifically.

For configuring the TRS resource set groups by using at least the second parameter set exclusive to the TRS resource sets and the third parameter set exclusive to the TRS resource set groups, the second parameter set exclusive to the TRS resource sets should at least include: CSI-RS scrambling ID, CSI-RS resource set ID.

Configuring the TRS resource set groups by the third parameter set exclusive to the TRS resource set groups includes at least: validity duration (Validity duration) of the TRS based on L1 signaling indication, Slot number, CSI-RS periodicity and offset value, frequency-domain starting RB value (startingRB), the number of RBs occupied by the frequency domain (nrofRBs), and ratio of NZP CSI-RS EPRE to SS/PBCH block EPRE (powerControlOffsetSS).

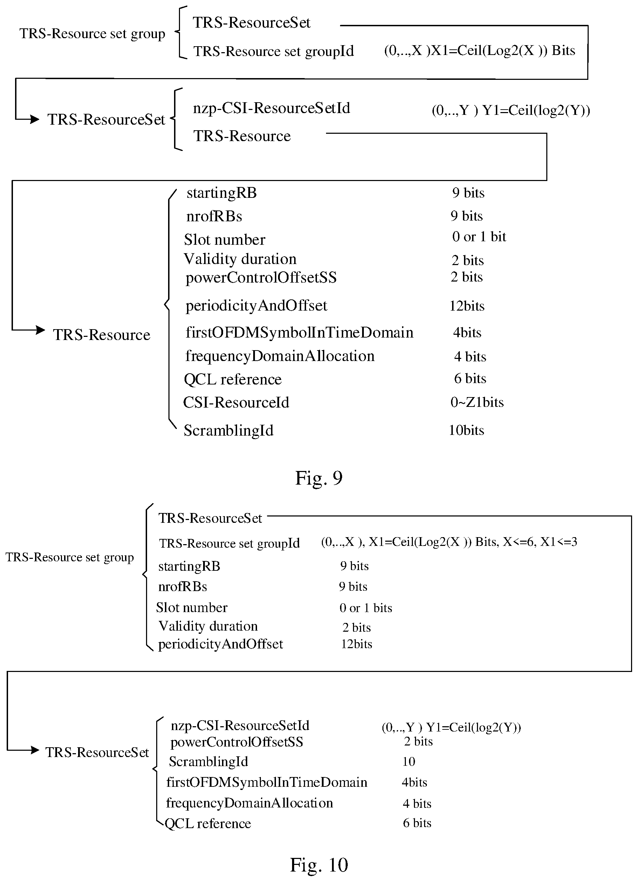

For configuring each CSI-RS/TRS resource set group independently by the first parameter set exclusive to the TRS resources, as shown in Fig. 9. In this case, the specific resource configuration information for a TRS is as follows.
1. When the base station can configure up to 1 TRS-Resource set group, that is, the base station only needs 1-bit L1 signaling to indicate whether the terminal receives CSI-RS/TRS, and the TRS-Resource set group ID does not need to be indicated, that is, 0 bit.
2. When the CSI-ResourceId information field needs to be indicated by 0-Z1 bits, with an indication value of 0~Z, the slot number is indicated through the explicit indication, which is 1 bit of indication. One TRS-Resource set group supports a maximum of 45 CSI-RS resources which are indicated through 6 bits. The amount of information that the SIB message needs to carry is (9+9+1+2+2+12+4+4+6+10+6) × 45 × 1=2925 bits<2976 bits.
3. When the base station can configure up to 6 TRS-Resource set groups, that is, the base station needs L1 signaling to indicate a maximum of 6 TRS-Resource set groups, then the TRS-Resource set group IDs need to be indicated by 3 bits. One TRS-Resource set group supports up to 7 CSI-RS resources which are indicated by 3 bits. The amount of information that the SIB message needs to carry is 3+(9+9+1+2+2+12+4+4+4+6+10+3) × 7 × 6=2607 bits<2976 bits.

Note: Without being limited to the quantity of SIBs, specific configuration can be carried out based on the first parameter set, that is, parameter configuration can be carried out according to the CSI-RS parameter in the first parameter set, and transmission using more than one SIB can be performed.

For configuring the TRS resource set group by at least using the second parameter set exclusive to the TRS resource sets and the third parameter set exclusive to the TRS resource set groups, the implementation method is the same as that in the specific application situation 2, and the other implementation method is shown in Fig. 10. The specific resource configuration information of the TRS is as follows:
1. When the base station can configure up to 1 TRS-Resource set group, that is, the base station only needs 1-bit L1 signaling to indicate whether the terminal receives the CSI-RS/TRS, and the TRS-Resource set group ID does not need to be indicated, that is, 0 bit. Each TRS-Resource set group supports a maximum of 89 TRS Resource sets which are indicated by 7 bits, with only one CSI-RS/TRS Resource in each TRS Resource set. The slot number is indicated through the explicit indication, which is 1 bit of indication. The SIB message needs to carry 9+9+1+2+12+(2+10+4+4+6+7) × 89 × 1=2970 bits<2976 bits.
2. When the base station can configure up to 6 TRS-Resource set groups, that is, the base station needs L1 signaling to indicate a maximum of 6 TRS-Resource set groups, then the TRS-Resource set group IDs need to be indicated by 3 bits. Each TRS-Resource set group supports a maximum of 16 TRS-Resource sets which are indicated by 4 bits, with only one CSI-RS/TRS Resource in each TRS Resource set. The slot number is indicated through the explicit indication, which is 1 bit of indication. The SIB message needs to carry 3+9+9+1+2+12+(2+10+4+4+6+4) × 16 × 6=2916 bits<2976 bits.

It should be noted that the beneficial effect of the application situation is that configuring TRS for the terminal in idle/inactive mode can be controlled within one SIB message, avoiding the configuration of TRS in the connected mode exceeding the limit of data carried by the SIB message, and accurately indicating the information of the TRS.

It should be noted that for the discussion of configuration methods of TRS in idle/inactive mode, it has been decided to use the SIB signaling configuration, but there is no specific solution. When the RRC signaling configuration method for CSI-RS in the connected mode is directly used for SIB transmission, it cannot be guaranteed to be used before paging, leading to a decrease in energy efficiency gain. Moreover, reusing the RRC signaling configuration method for CSI-RS in the connected mode will result in significant SIB signaling overhead. The embodiments of the present disclosure provide binding of the resource configuration information of CSI-RS/TRS with the paging/SSB, which is beneficial for terminal energy conservation and can significantly reduce the system message signaling overhead.

The embodiments of the present application may be applicable to various systems, especially 5G systems. For example, the applicable systems may be: global system of mobile communication (global system of mobile communication, GSM) system, code division multiple access (code division multiple access, CDMA) system, wideband code division multiple access (Wideband Code Division Multiple Access, WCDMA) general packet radio service (general packet radio service GPRS) system, long term evolution (long term evolution, LTE) system, LTE frequency division duplex (frequency division duplex, FDD) system, LTE time division duplex (time division duplex, TDD) system, long term evolution advanced (long term evolution advanced, LTE-A) system, universal mobile telecommunication system (universal mobile telecommunication system, UMTS), worldwide interoperability for microwave access (worldwide interoperability for microwave access, WiMAX) system, 5G new radio (New Radio, NR) system, etc. All of these systems include terminal devices and network devices. The systems can also include core network components, such as evolved packet system (Evolved Packet System, EPS), 5G system (5GS), etc.

The terminal device involved in the embodiments of the present application may be a device for providing the voice and/or data connectivity to the user, a handheld device with the wireless connection function, or other processing device connected to the wireless modem. In different systems, the terminal device may have different names. For example, in a 5G system, the terminal device may be referred to as user equipment (User Equipment, UE). The wireless terminal device may communicate with one or more core networks (Core Network, CN) via the radio access network (Radio Access Network, RAN), and the wireless terminal device may be a mobile terminal, such as a mobile telephone (or called "cellular" telephone), and a computer with the mobile terminal, for example, may be a portable, pocket, handheld, computer built-in or vehicle-carried mobile device, and they exchange the voice and/or data with the RAN. For example, personal communication service (Personal Communication Service PCS) telephone, cordless telephone, session initiation protocol (Session Initiation Protocol, SIP) telephone, wireless local loop (Wireless Local Loop, WLL) station, personal digital assistant (Personal Digital Assistant, PDA) and other devices. The wireless terminal device may also be called system, subscriber device (subscriber unit), subscriber station (subscriber station), mobile station (mobile station), mobile (mobile), remote station (remote station), access point (access point), remote terminal (remote terminal), access terminal (access terminal), user terminal (user terminal), user agent (user agent), user device (user device), which is not limited in the embodiments of the present application.

The network device involved in the embodiments of the present application may be a base station, which may include cells that provide services for terminals. Depending on specific application scenarios, the base station may also be called access point, or may refer to a device in the access network communicating with the wireless terminal via one or more sectors over an air interface, or may have other names. The network device may be configured to perform the interconversion between the received air frame and internet protocol (Internet Protocol, IP) packet, and used as the router between the wireless terminal device and the rest of the access network. The rest of the access network may include IP (IP) networks. The network device may further coordinate the attribute management of the air interface. For example, the network device involved in the embodiments of the present application can be a network device (Base Transceiver Station, BIS) in the global system for mobile communications (Global System for Mobile communications, GSM) system or code division multiple access (Code Division Multiple Access, CDMA) system, or can be a network device (NodeB) in the wide-band code division multiple access (Wide-band Code Division Multiple Access, WCDMA) system, or can be an evolutional Node B (evolutional Node B, eNB or e-NodeB) in the long term evolution (long term evolution, LTE) system, a 5G base station (gNB) in the 5G network architecture (next generation system), or can be a home evolved Node B (Home evolved Node B, HeNB), a relay node (relay node), femto (femto), pico (pico), etc., which is not limited in the embodiments of the present application. In some network structures, network devices can include centralized unit (centralized unit, CU) nodes and distributed unit (distributed unit, DU) nodes, and centralized unit and distributed unit can also be geographically separated.

The network device and the terminal device can each use one or more antennas for multi input multi output (Multi Input Multi Output, MIMO) transmission, which can be single user MIMO (Single User MIMO, SU-MIMO) or multiple user MIMO (Multiple User MIMO, MU-MIMO). According to the shape and quantity of root antenna combinations, MIMO transmission can be two-dimensional MIMO (2Dimension MIMO, 2D MIMO), three-dimensional MIMO (3Dimension MIMO, 3D MIMO), full dimension MIMO (Full Dimension MIMO, FD MIMO) or ultra large scale MIMO (massive-MIMO), as well as diversity transmission, pre-coding transmission, or beamforming transmission.

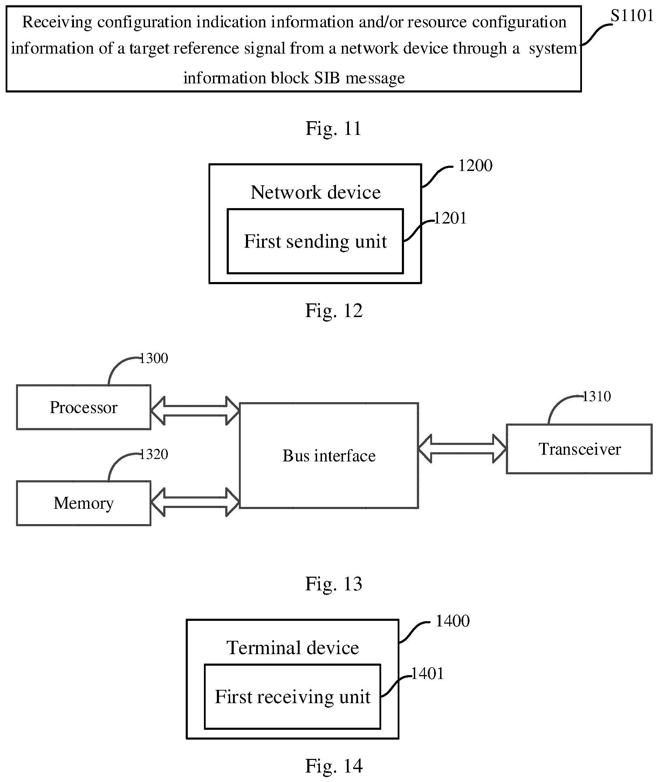

Corresponding to the implementation on the network device side, as shown in Fig. 11, the embodiments of the present disclosure provide a resource configuration method performed by a terminal device, including:
Step S 1101: receiving configuration indication information and/or resource configuration information of a target reference signal sent by a network device through a system information block SIB message;
The configuration indication information is configured to indicate a generation method of the resource configuration information of the target reference signal;
The resource configuration information includes at least one of the following:
   a first parameter set applied to a single target reference signal resource; or
   a second parameter set applied to each target reference signal resource in a target reference signal resource set; or
   a third parameter set applied to each target reference signal resource in each target reference signal resource set in a target reference signal resource set group.

Optionally, the resource configuration information includes: configuration information generated using a first method; or configuration information generated using a second method.

Optionally, the configuration indication information is configured to indicate whether the resource configuration information is generated by using the first method or the second method.

Optionally, when the resource configuration information is generated by using the first method, the resource configuration information satisfies one of the following:
there are simultaneously the first parameter set, the second parameter set, and the third parameter set; or there are simultaneously the second parameter set and the third parameter set; or there is only the first parameter set and/or there are simultaneously the second parameter set and the third parameter set.

Optionally, the target reference signal includes a channel-state-information reference signal CSI-RS.

Optionally, the CSI-RS is a channel tracking reference signal TRS.

Optionally, the first parameter set includes at least one of the following parameters: scrambling identification of the target reference signal; or a validity duration of the target reference signal based on layer-one signaling indication.

Optionally, the second parameter set includes at least one of the following parameters: scrambling identification of the target reference signal; or periodicity and an offset value of the target reference signal; or Quasi co-location QCL reference; or Quantity of slots in which the target reference signal is located; or identification of the target reference signal resource set; or a validity duration of the target reference signal based on layer-one signaling indication.

Optionally, the quantity of slots in which the target reference signal is located satisfies at least one of the following:
occupying 0 to 2 bits; or being indicated through an explicit or implicit manner.

Optionally, the third parameter set includes at least one of the following parameters: periodicity and an offset value of the target reference signal; or a value of the frequency-domain starting resource block RB; or the quantity of RBs occupied by the frequency domain; or the validity duration of the target reference signal based on layer-one signaling indication; or the quantity of slots in which the target reference signal is located; or the ratio of the power of each resource element in the non-zero power target reference signal to the power of each resource element in the synchronization signal/physical broadcast channel block SS/PBCH block; or identification of the target reference signal resource set group.

Optionally, the validity duration of the target reference signal based on layer-one signaling indication satisfies at least one of the following:
the quantity of occupied bits is less than or equal to 4; or the maximum quantity is less than or equal to 16.

Optionally, the target reference signal resource set group satisfies at least one of the following:
the maximum quantity is less than or equal to 6; or the quantity of bits occupied is less than or equal to 3.

Optionally, the target reference signal resource set satisfies at least one of the following: the maximum quantity is less than or equal to 128; or the quantity of bits occupied is less than or equal to 7.

Optionally, the target reference signal resources satisfy at least one of the following:
the maximum quantity is less than or equal to 89; or the quantity of bits occupied is less than or equal to 7.

Optionally, the method further includes:
receiving receiving indication information sent by the network device, the receiving indication information is configured to indicate whether the terminal device is to receive the target reference signal;

When the receiving indication information indicates the terminal device to receive the target reference signal, the target reference signal is received based on the resource configuration information of the target reference signal.

It should be noted that all descriptions of the terminal device side in the above embodiments are applicable to the implementation of the resource configuration method applied to the terminal device side, and can also achieve the same technical effect.

As shown in Fig. 12, the embodiments of the present disclosure provide a network device 1200, including:
a first sending unit 1201, configured to send configuration indication information and/or resource configuration information of a target reference signal to a terminal device in an idle mode or an inactive mode, by a system information block SIB message.

The configuration indication information is configured to indicate a generation method of the resource configuration information of the target reference signal.

The resource configuration information includes at least one of the following:
a first parameter set applied to a single target reference signal resource; or a second parameter set applied to each target reference signal resource in a target reference signal resource set; or a third parameter set applied to each target reference signal resource in each target reference signal resource set in a target reference signal resource set group.

Optionally, the resource configuration information includes: configuration information generated using a first method; or configuration information generated using a second method.

Optionally, the configuration indication information is configured to indicate whether the resource configuration information is generated by using the first method or the second method.

Optionally, when the resource configuration information is generated by using the first method, the resource configuration information satisfies one of the following:
there are simultaneously the first parameter set, the second parameter set, and the third parameter set; or there are simultaneously the second parameter set and the third parameter set; or there is only the first parameter set and/or there are simultaneously the second parameter set and the third parameter set.

Optionally, the target reference signal includes a channel-state-information reference signal CSI-RS.

Optionally, the CSI-RS is a channel tracking reference signal TRS.

Optionally, the first parameter set includes at least one of the following parameters: scrambling identification of the target reference signal; or validity duration of the target reference signal based on layer-one signaling indication.

Optionally, the second parameter set includes at least one of the following parameters: scrambling identification of the target reference signal; or periodicity and an offset value of the target reference signal; or Quasi co-location QCL reference; or quantity of slots in which the target reference signal is located; or identification of the target reference signal resource set; or the validity duration of the target reference signal based on layer-one signaling indication.

Optionally, the quantity of slots in which the target reference signal is located satisfies at least one of the following:
occupying 0 to 2 bits; or indicating through an explicit or implicit method.

Optionally, the third parameter set includes at least one of the following parameters: periodicity and an offset value of the target reference signal; or a value of the frequency-domain starting resource block RB; or quantity of RBs occupied by the frequency domain; or a validity duration of the target reference signal based on layer-one signaling indication; or quantity of slots in which the target reference signal is located; or the ratio of the power of each resource element in the non-zero power target reference signal to the power of each resource element in the synchronization signal/physical broadcast channel block SS/PBCH block; or identification of the target reference signal resource set group.

Optionally, the validity duration of the target reference signal based on layer-one signaling indication satisfies at least one of the following:
the quantity of occupied bits is less than or equal to 4; or the maximum quantity is less than or equal to 16.

Optionally, the target reference signal resource set group satisfies at least one of the following:
the maximum quantity is less than or equal to 6; or the quantity of bits occupied is less than or equal to 3.

Optionally, the target reference signal resource set satisfies at least one of the following: the maximum quantity is less than or equal to 128; or the quantity of bits occupied is less than or equal to 7.

Optionally, the target reference signal resource satisfies at least one of the following: the maximum quantity is less than or equal to 89; or the quantity of bits occupied is less than or equal to 7.

Optionally, the network device further includes:
a second sending unit, configured to send receiving indication information to the terminal device, the receiving indication information is configured to indicate whether the terminal device is to receive the target reference signal.

Optionally, the second sending unit is specifically configured to implement:
determining the layer-one signaling used for sending the receiving indication information; sending the receiving indication information to the terminal device through the layer-one signaling.

The implementation method of determining the layer-one signaling used for sending the receiving indication information by the second sending unit, includes:
determining the layer-one signaling used for sending the receiving indication information through first information;

The first information includes at least one of the following: terminal capability information and second information.

For the second sending unit, the second information includes: indication information of a sending method, the indication information of the sending method is configured to indicate that at least one of the paging early indication PEI and paging downlink control information DCI is used to send the receiving indication information to the terminal device.

For the second sending unit, the terminal capability information refers to whether the terminal device supports the ability to detect the receiving indication information carried by at least one of PEI and paging DCI.

It should be noted that the embodiments of the network device corresponds one-to-one to the above method embodiments. All implementation methods in the above method embodiments are applicable to the embodiments of the network device and can also achieve the same technical effect.

It should be noted that the division of units in the embodiments of the present disclosure is illustrative and only serves as a logical function division. In actual implementation, there may be other division methods. In addition, in the various embodiments disclosed herein, each functional unit can be integrated into one processing unit, each unit can exist physically alone, or two or more units can be integrated into one unit. The integrated units mentioned above can be implemented in both hardware and software functional units.

If the integrated unit is implemented in the form of a software functional unit and sold or used as an independent product, it can be stored in a processor readable storage medium. Based on the understanding, the technical solutions disclosed herein can essentially or in part contribute to the relevant technology, or all or part of the technical solutions, be reflected in the form of a software product. The computer software product is stored in a storage medium, including several instructions to enable a computer device (which can be a personal computer, server, or network device, etc.) or processor (processor) to perform all or part of the steps of the methods described in the various embodiments of the present disclosure. The aforementioned storage medium includes: U disk, mobile hard drive, read-only memory (Read-Only Memory, ROM), random access memory (Random Access Memory, RAM), disks or CDs, and other media that can store program code.

As shown in Fig. 13, the embodiments of the present disclosure further provide a network device including a processor 1300, a transceiver 1310, a memory 1320, and a program stored in the memory 1320 and executed by the processor 1300; where, the transceiver 1310 is connected to the processor 1300 and the memory 1320 through a bus interface, where, the processor 1300 is configured to read the program in the memory and perform the following processes:
sending configuration indication information and/or resource configuration information of a target reference signal to a terminal device in an idle mode or an inactive mode by a system information block SIB message through the transceiver 1310.

The configuration indication information is configured to indicate a generation method of the resource configuration information of the target reference signal;

The resource configuration information includes at least one of the following:
a first parameter set applied to a single target reference signal resource; or a second parameter set applied to each target reference signal resource in a target reference signal resource set; or a third parameter set applied to each target reference signal resource in each target reference signal resource set in a target reference signal resource set group.

The transceiver 1310 is configured to receive and send data under the control of processor 1300.

In Fig. 13, bus architecture can include any quantity of interconnected buses and bridges, specifically one or more processors represented by processor 1300 and various circuits of memory represented by memory 1320 connected together. The bus architecture can also link various other circuits such as peripheral devices, regulators, and power management circuits together, which are well-known in this field. Therefore, this article will not further describe them. The bus interface provides an interface. The transceiver 1310 can be multiple components, including a transmitter and a receiver, providing a unit for communicating with various other devices on a transmission medium, including wireless channels, wired channels, optical cables, and other transmission media. The processor 1300 is responsible for managing the bus architecture and typical processing, while the memory 1320 can store the data used by the processor 1300 during operations.

The processor 1300 can be a central processing unit (Central Processing Unit, CPU), application specific integrated circuit (Application Specific Integrated Circuit, ASIC), field-programmable gate array (Field-Programmable Gate Array, FPGA), or complex programmable logic device (Complex Programmable Logic Device, CPLD), and the processor can also adopt a multi-core architecture.

Furthermore, the resource configuration information includes:
configuration information generated using a first method; or configuration information generated using a second method.

Furthermore, the configuration indication information is configured to indicate whether the resource configuration information is generated by using the first method or the second method.

Furthermore, when the resource configuration information is generated by using the first method, the resource configuration information satisfies one of the following:
there are simultaneously the first parameter set, the second parameter set, and the third parameter set; or there are simultaneously the second parameter set and the third parameter set; or there is only the first parameter set and/or there are simultaneously the second parameter set and the third parameter set.

Furthermore, the target reference signal includes a channel-state-information reference signal CSI-RS.

Furthermore, the CSI-RS is a channel tracking reference signal TRS.

Furthermore, the first parameter set includes at least one of the following parameters: scrambling identification of the target reference signal; or validity duration of the target reference signal based on layer-one signaling indication.

Furthermore, the second parameter set includes at least one of the following parameters: scrambling identification of the target reference signal; or periodicity and an offset value of the target reference signal; or Quasi co-location QCL reference; or quantity of slots in which the target reference signal is located; or identification of the target reference signal resource set; or validity duration of the target reference signal based on layer-one signaling indication.

Furthermore, the quantity of slots in which the target reference signal is located satisfies at least one of the following:
occupying 0 to 2 bits; or being indicated through an explicit or implicit manner.

Furthermore, the third parameter set includes at least one of the following parameters: periodicity and an offset value of the target reference signal; or a value of the frequency-domain starting resource block RB; or quantity of RBs occupied by the frequency domain; or a validity duration of the target reference signal based on layer-one signaling indication; or quantity of slots in which the target reference signal is located; or a ratio of the power of each resource element in the non-zero power target reference signal to the power of each resource element in the synchronization signal/physical broadcast channel block SS/PBCH block; or identification of the target reference signal resource set group.

Furthermore, the validity duration of the target reference signal based on layer-one signaling indication satisfies at least one of the following:
the quantity of occupied bits is less than or equal to 4; or the maximum quantity is less than or equal to 16.

Furthermore, the target reference signal resource set group satisfies at least one of the following:
the maximum quantity is less than or equal to 6; or the quantity of bits occupied is less than or equal to 3.

Furthermore, the target reference signal resource set satisfies at least one of the following: the maximum quantity is less than or equal to 128; or the quantity of bits occupied is less than or equal to 7.

Furthermore, the target reference signal resource satisfies at least one of the following: the maximum quantity is less than or equal to 89; or the quantity of bits occupied is less than or equal to 7.

Furthermore, the processor is configured to read the computer program in the memory and perform the following operations:
sending the receiving indication information to the terminal device through the transceiver, the receiving indication information is configured to indicate whether the terminal device is to receive the target reference signal.

Furthermore, the processor is configured to read the computer program in the memory and perform the following operations:
determining the layer-one signaling used for sending the receiving indication information;
sending the receiving indication information to the terminal device through the layer-one signaling.

Furthermore, the processor is configured to read the computer program in the memory and perform the following operations:
determining the layer-one signaling used for sending the receiving indication information through first information.

The first information includes at least one of the following:
terminal capability information; or second information.

Furthermore, the second information includes: indication information of a sending method, the indication information of the sending method is configured to indicate that at least one of the paging early indication PEI and paging downlink control information DCI is used to send the receiving indication information to the terminal device.

Furthermore, the terminal capability information refers to whether the terminal device supports the ability to detect the receiving indication information carried by at least one of PEI and paging DCI.

It should be noted that the above-mentioned network device provided in the embodiments can achieve all the method steps implemented in the above method embodiments and achieve the same technical effects. Therefore, the same parts and beneficial effects as in the method embodiments in the embodiments will not be elaborated in detail.

The embodiments of the present disclosure also provide a computer-readable storage medium on which a computer program is stored, where when the computer program is executed by a processor, the steps of the resource configuration method applied to a network device are implemented. The processor-readable storage medium can be any available medium or data storage device that can be accessed by a processor, which includes but not limited to magnetic memory (such as floppy disk, hard disk, magnetic tape, magneto-optical disk (Magneto-Optical Disk, MO), etc.), optical storage (such as CD, DVD, BD, HVD, etc.), as well as semiconductor memory (such as ROM, EPROM, EEPROM, non-volatile memory (NAND FLASH), solid state disk (SSD)), etc.

As shown in Fig. 14, the embodiments of the present disclosure provide a terminal device 1400, including:
a first receiving unit 1401, configured to receive configuration indication information and/or resource configuration information of a target reference signal sent by a network device through a system information block SIB message.

The configuration indication information is configured to indicate a generation method of resource configuration information of the target reference signal.

The resource configuration information includes at least one of the following:
a first parameter set applied to a single target reference signal resource; or a second parameter set applied to each target reference signal resource in a target reference signal resource set; or a third parameter set applied to each target reference signal resource in each target reference signal resource set in a target reference signal resource set group.

Optionally, the resource configuration information includes:
configuration information generated using a first method; or configuration information generated using a second method.

Optionally, the configuration indication information is configured to indicate whether the resource configuration information is generated by using the first method or the second method.

Optionally, when the resource configuration information is generated by using the first method, the resource configuration information satisfies one of the following:
there are simultaneously the first parameter set, the second parameter set, and the third parameter set; or there are simultaneously the second parameter set and the third parameter set; or there is only the first parameter set and/or there are simultaneously the second parameter set and the third parameter set.

Optionally, the target reference signal includes a channel-state-information reference signal CSI-RS.

Optionally, the CSI-RS is a channel tracking reference signal TRS.

Optionally, the first parameter set includes at least one of the following parameters: scrambling identification of the target reference signal; or validity duration of the target reference signal based on layer-one signaling indication.

Optionally, the second parameter set includes at least one of the following parameters: scrambling identification of the target reference signal; or periodicity and an offset value of the target reference signal; or Quasi co-location QCL reference; or quantity of slots in which the target reference signal is located; or identification of the target reference signal resource set; or a validity duration of the target reference signal based on layer-one signaling indication.

Optionally, the quantity of slots in which the target reference signal is located satisfies at least one of the following:
occupying 0 to 2 bits; or being indicated through an explicit or implicit manner.

Optionally, the third parameter set includes at least one of the following parameters: periodicity and an offset value of the target reference signal; or a value of the frequency-domain starting resource block RB; or quantity of RBs occupied by the frequency domain; or a validity duration of the target reference signal based on layer-one signaling indication; or quantity of slots in which the target reference signal is located; or the ratio of the power of each resource element in the non-zero power target reference signal to the power of each resource element in the synchronization signal/physical broadcast channel block SS/PBCH block; or identification of the target reference signal resource set group.

Optionally, the validity duration of the target reference signal based on layer-one signaling indication satisfies at least one of the following:
the quantity of occupied bits is less than or equal to 4; or the maximum quantity is less than or equal to 16.

Optionally, the target reference signal resource set group satisfies at least one of the following:
the maximum quantity is less than or equal to 6; or the quantity of bits occupied is less than or equal to 3.

Optionally, the target reference signal resource set satisfies at least one of the following: the maximum quantity is less than or equal to 128; or the quantity of bits occupied is less than or equal to 7.

Optionally, the target reference signal resource satisfies at least one of the following: the maximum quantity is less than or equal to 89; or the quantity of bits occupied is less than or equal to 7.

Optionally, the terminal device further includes:
a second receiving unit, configured to receive receiving indication information sent by the network device, the receiving indication information is configured to indicate whether the terminal device is to receive the target reference signal;
When the receiving indication information indicates the terminal device to receive the target reference signal, the target reference signal is received based on the resource configuration information of the target reference signal.

It should be noted that the embodiments of the terminal device corresponds one-to-one to the above method embodiments. All implementation methods in the above method embodiments are applicable to the embodiments of the terminal device and can also achieve the same technical effect.

It should be noted that the division of units in the embodiments of the present disclosure is illustrative and only serves as a logical function division. In actual implementation, there may be other division methods. In addition, in the various embodiments disclosed herein, each functional unit can be integrated into one processing unit, each unit can exist physically alone, or two or more units can be integrated into one unit. The integrated units mentioned above can be implemented in both hardware and software functional units.

If the integrated unit is implemented in the form of a software functional unit and sold or used as an independent product, it can be stored in a processor readable storage medium. Based on the understanding, the technical solutions disclosed herein can essentially or in part contribute to the relevant art, or all or part of the technical solutions, be reflected in the form of a software product. The computer software product is stored in a storage medium, including several instructions to enable a computer device (which can be a personal computer, server, or network device, etc.) or processor (processor) to perform all or part of the steps of the methods described in the various embodiments of the present disclosure. The aforementioned storage medium includes: U disk, mobile hard drive, read-only memory (Read-Only Memory, ROM), random access memory (Random Access Memory, RAM), disks or CDs, and other media that can store program code.

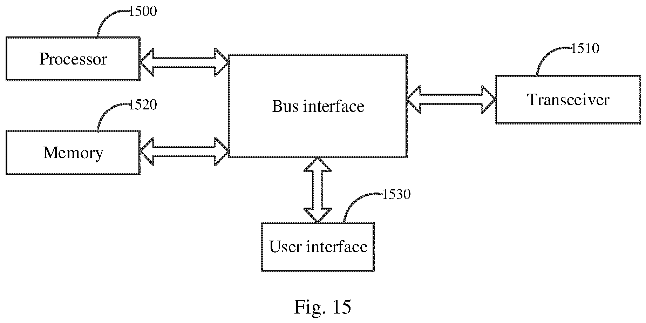

As shown in Fig. 15, the embodiments of the present disclosure further provide a terminal device including a processor 1500, a transceiver 1510, a memory 1520, and a program stored in the memory 1520 and executed by the processor 1500; where, the transceiver 1510 is connected to the processor 1500 and the memory 1520 through a bus interface, where the processor 1500 is configured to read the program in the memory and perform the following processes:
receiving, through transceiver 1510, configuration indication information and/or resource configuration information of a target reference signal sent by a network device through a system information block SIB message.

The configuration indication information is configured to indicate a generation method of the resource configuration information of the target reference signal;

The resource configuration information includes at least one of the following:
a first parameter set applied to a single target reference signal resource; or a second parameter set applied to each target reference signal resource in a target reference signal resource set; or a third parameter set applied to each target reference signal resource in each target reference signal resource set in a target reference signal resource set group.

The transceiver 1510 is configured to receive and send data under the control of processor 1500.

In Fig. 15, bus architecture can include any quantity of interconnected buses and bridges, specifically one or more processors represented by processor 1500 and various circuits of memory represented by memory 1520 connected together. The bus architecture can also link various other circuits such as peripheral devices, regulators, and power management circuits together, which are well-known in this field. Therefore, the present application will not further describe them. The bus interface provides an interface. The transceiver 1510 can be multiple components, including a transmitter and a receiver, providing a unit for communicating with various other devices on a transmission medium, including wireless channels, wired channels, optical cables, and other transmission media. For different user devices, the user interface 1530 can also be an interface that can connect external and internal devices, including but not limited to keyboards, displays, speakers, microphones, joysticks, etc.

The processor 1500 is responsible for managing the bus architecture and typical processing, while the memory 1520 can store the data used by the processor 1500 during operations.

Optionally, The processor 1500 can be a central processing unit (Central Processing Unit, CPU), application specific integrated circuit (Application Specific Integrated Circuit, ASIC), field-programmable gate array (Field-Programmable Gate Array, FPGA), or complex programmable logic device (Complex Programmable Logic Device, CPLD), and the processor can also adopt a multi-core architecture.

The processor is configured to execute any of the methods provided in the present disclosure by calling the computer program stored in memory and executing the obtained executable instructions. The processor and memory can also be physically arranged separately.

Furthermore, the resource configuration information includes:
configuration information generated using a first method; or configuration information generated using a second method.

Furthermore, the configuration indication information is configured to indicate whether the resource configuration information is generated by using the first method or the second method.

Furthermore, when the resource configuration information is generated by using the first method, the resource configuration information satisfies one of the following:
there are simultaneously the first parameter set, the second parameter set, and the third parameter set; or there are simultaneously the second parameter set and the third parameter set; or there is only the first parameter set and/or there are simultaneously the second parameter set and the third parameter set.

Furthermore, the target reference signal includes a channel-state-information reference signal CSI-RS.

Furthermore, the CSI-RS is a channel tracking reference signal TRS.

Furthermore, the first parameter set includes at least one of the following parameters: scrambling identification of the target reference signal; or a validity duration of the target reference signal based on layer-one signaling indication.

Furthermore, the second parameter set includes at least one of the following parameters: scrambling identification of the target reference signal; or periodicity and an offset value of the target reference signal; or Quasi co-location QCL reference; or quantity of slots in which the target reference signal is located; or identification of the target reference signal resource set; or the validity duration of the target reference signal based on layer-one signaling indication.

Furthermore, the quantity of slots in which the target reference signal is located satisfies at least one of the following:
occupying 0 to 2 bits; or being indicated through an explicit or implicit manner.

Furthermore, the third parameter set includes at least one of the following parameters: periodicity and an offset value of the target reference signal; or a value of the frequency-domain starting resource block RB; or quantity of RBs occupied by the frequency domain; or a validity duration of the target reference signal based on layer-one signaling indication; or the quantity of slots in which the target reference signal is located; or the ratio of the power of each resource element in the non-zero power target reference signal to the power of each resource element in the synchronization signal/physical broadcast channel block SS/PBCH block; or identification of the target reference signal resource set group.

Furthermore, the validity duration of the target reference signal based on layer-one signaling indication satisfies at least one of the following:
the quantity of occupied bits is less than or equal to 4; or the maximum quantity is less than or equal to 16.

Furthermore, the target reference signal resource set group satisfies at least one of the following:
the maximum quantity is less than or equal to 6; or the quantity of bits occupied is less than or equal to 3.

Furthermore, the target reference signal resource set satisfies at least one of the following: the maximum quantity is less than or equal to 128; or the quantity of bits occupied is less than or equal to 7.

Furthermore, the target reference signal resource satisfies at least one of the following: the maximum quantity is less than or equal to 89; or the quantity of bits occupied is less than or equal to 7.

Furthermore, the processor is configured to read the computer program in the memory and perform the following operations:
receiving, through the transceiver, receiving indication information sent by the network device, wherein the receiving indication information is configured to indicate whether the terminal device is to receive the target reference signal;

When the receiving indication information indicates the terminal device to receive the target reference signal, the target reference signal is received based on the resource configuration information of the target reference signal.

It should be noted that the terminal device provided in the embodiments of the present disclosure is capable of implementing all the method steps implemented in the above method embodiments and achieving the same technical effects. Therefore, the same parts and beneficial effects as in the method embodiments in this embodiment will not be elaborated in detail.

An embodiment of the present disclosure further provides a computer-readable storage medium on which a computer program is stored, where when the computer program is executed by a processor, the steps of the resource configuration method applied to a terminal device are implemented. The processor-readable storage medium may be any available medium or data storage device that can be accessed by a processor, which includes but not limited to magnetic storage (such as floppy disk, hard disk, magnetic tape, magneto-optical disk (Magneto-Optical Disk, MO), etc.), optical storage (such as compact disk (Compact Disk, CD), digital versatile disc (Digital Versatile Disc, DVD), blu-ray disc (Blu-ray Disc, BD), high-definition versatile disc (High-Definition Versatile Disc, HVD), etc.), and semiconductor memory (such as read-only memory (Read-Only Memory, ROM), erasable programmable ROM (Erasable Programmable ROM, EPROM), electrically EPROM (Electrically EPROM, EEPROM), non-volatile memory (NAND FLASH), solid state disk (Solid State Disk or Solid State Drive, SSD)), etc.

Those skilled in the art should understand that the embodiments of the present disclosure may be provided as methods, systems, or computer program products. Therefore, the present disclosure can take the form of a full hardware embodiment, a full software embodiment, or an embodiment combining software and hardware aspects. Furthermore, the present disclosure may take the form of a computer program product embodied on one or more computer-usable storage media (including but not limited to magnetic disk storage and optical storage, etc.) having computer-usable program code embodied therein.

The present disclosure is described with reference to flowcharts and/or block diagrams of a method, an apparatus (system), and a computer program product according to the embodiments of the present disclosure. It should be understood that each process and/or block in the flowchart and/or block diagram, and combinations of processes and/or blocks in the flowchart and/or block diagram can be implemented by computer-executable instructions. These computer-executable instructions can be provided to a general-purpose computer, special purpose computer, embedded processor, or processor of other programmable data processing equipment to produce a machine, such that instructions executed by the processor of the computer or other programmable data processing equipment produce an apparatus for realizing the functions specified in one or more processes of a flowchart and/or one or more blocks of a block diagram.

These processor-executable instructions may also be stored in a processor-readable memory capable of directing a computer or other programmable data processing device to operate in a specific manner, such that the instructions stored in the processor-readable memory produce an article of manufacture including instruction means, these instruction means implements the functions specified in one or more processes of the flowchart and/or one or more blocks of the block diagram.

These processor-executable instructions can also be loaded onto a computer or other programmable data processing device, which enables a series of operational steps to be performed on the computer or other programmable device to produce a computer-implemented process, so that the instructions executed on the computer or other programmable devices provide steps for realizing the functions specified in one or more processes of the flowchart and/or one or more blocks of the block diagram.

It should be noted that it should be understood that the division of the above modules is only a division of logical functions, and may be fully or partially integrated into a physical entity or physically separated during actual implementation. And these modules can all be implemented in the form of calling software through processing elements; or these modules can all be implemented in the form of hardware; some modules can also be implemented in the form of calling software through processing elements, and some modules can be implemented in the form of hardware. For example, the determining module may be a separate processing element, or may be integrated in a chip of the above-mentioned device. In addition, the determining module may also be stored in the memory of the above-mentioned device in the form of program code, and a certain processing element of the above-mentioned device may call and execute the functions of the above-mentioned determining modules. The implementation of other modules is similar. In addition, all or part of these modules can be integrated together, and can also be implemented independently. The processing element mentioned here may be an integrated circuit with signal processing capabilities. In the implementation process, each step of the above method or each module above can be completed by an integrated logic circuit of hardware in the processor element or an instruction in the form of software.

For example, each module, unit, subunit or submodule may be one or more integrated circuits configured to implement the above method, for example: one or more specific integrated circuits (Application Specific Integrated Circuit, ASIC), or, one or more microprocessors (digital signal processor, DSP), or, one or more field programmable gate arrays (Field Programmable Gate Array, FPGA), etc. For another example, when one of the above modules is implemented in the form of a processing element scheduling program code, the processing element may be a general-purpose processor, such as a central processing unit (Central Processing Unit, CPU) or other processors that can call program codes. For another example, these modules can be integrated together and implemented in the form of a system-on-a-chip (system-on-a-chip, SOC).

Such terms as "first" and "second" in the specification and claims of the present disclosure are configured to distinguish similar objects, and are not necessarily configured to describe a specific order or sequence. It should be understood that the data so used are interchangeable under appropriate circumstances such that the embodiments of the present disclosure described herein, for example, can be implemented in sequences other than those illustrated or described herein. Furthermore, the terms "comprising" and "having", as well as any variations thereof, are intended to cover a non-exclusive inclusion, for example, a process, method, system, product or device including a sequence of steps or elements is not necessarily limited to those steps or elements explicitly listed, but may include other steps or elements not explicitly listed or inherent to the process, method, product or device. In addition, the use of "and/or" in the specification and claims means at least one of the connected objects, such as A and/or B and/or C, means such these seven cases: A alone, B alone, C alone, and both A and B exist, both B and C exist, both A and C exist, and A, B, and C all exist. Similarly, the use of "at least one of A and B" in the present specification and claims should be understood as "A alone, B alone, or both A and B exist".

Obviously, those skilled in the art can make various changes and modifications to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations.

## Claims

1. A resource configuration method performed by a network device, comprising:
sending configuration indication information and/or resource configuration information of a target reference signal to a terminal device in an idle mode or in an inactive mode, by using system information block SIB messages;
wherein the configuration indication information is configured to indicate a generation method of the resource configuration information of the target reference signal;
the resource configuration information comprises at least one of the following:
a first parameter set applied to a single target reference signal resource;
a second parameter set applied to each target reference signal resource in a target reference signal resource set;
a third parameter set applied to each target reference signal resource in each target reference signal resource set in a target reference signal resource set group.

2. The method according to claim 1, wherein the resource configuration information comprises:
configuration information generated using a first method; or
configuration information generated using a second method.

3. The method according to claim 2, wherein the configuration indication information is configured to indicate whether the resource configuration information is generated by the first method or the second method.

4. The method according to claim 2, wherein when the resource configuration information is generated by using the first method, the resource configuration information satisfies one of the following:
there are simultaneously the first parameter set, the second parameter set and the third parameter set;
there are simultaneously the second parameter set and the third parameter set;
there is only the first parameter set and/or there are simultaneously the second parameter set and the third parameter set.

5. The method according to claim 1, wherein the target reference signal comprises: channel-state-information reference signal CSI-RS.

6. The method according to claim 5, wherein the CSI-RS is a channel tracking reference signal TRS.

7. The method according to claim 1, wherein the first parameter set comprises at least one of the following parameters:
scrambling identification of the target reference signal;
a validity duration of the target reference signal indicated based on layer-one signaling.

8. The method according to claim 1, wherein the second parameter set comprises at least one of the following parameters:
scrambling identification of the target reference signal;
periodicity and an offset value of the target reference signal;
quasi co-location QCL reference;
quantity of slots in which the target reference signal is located;
identification of the target reference signal resource set;
a validity duration of the target reference signal indicated based on layer-one signaling.

9. The method according to claim 8, wherein the quantity of slots in which the target reference signal is located satisfies at least one of the following:
occupying 0 to 2 bits;
indication through an explicit or implicit manner.

10. The method according to claim 1, wherein the third parameter set comprises at least one of the following parameters:
periodicity and an offset value of the target reference signal;
a value of a frequency-domain starting resource block RB;
quantity of RBs occupied by a frequency domain;
a validity duration of the target reference signal indicated based on layer-one signaling;
quantity of slots in which the target reference signal is located;
a ratio of a power of each resource element in a non-zero power target reference signal to a power of each resource element in synchronization signal/physical broadcast channel block SS/PBCH block;
identification of the target reference signal resource set group.

11. The method according to claim 7, 8 or 10, wherein the validity duration of the target reference signal indicated based on layer-one signaling satisfies at least one of the following:
a quantity of occupied bits is less than or equal to 4;
a maximum quantity is less than or equal to 16.

12. The method according to claim 1, wherein the target reference signal resource set group satisfies at least one of the following:
a maximum quantity is less than or equal to 6;
a quantity of occupied bits is less than or equal to 3.

13. The method according to claim 1, wherein, the target reference signal resource set satisfies at least one of the following:
a maximum quantity is less than or equal to 128;
a quantity of occupied bits is less than or equal to 7.

14. The method according to claim 1, wherein the target reference signal resource satisfies at least one of the following:
a maximum quantity is less than or equal to 89;
a quantity of occupied bits is less than or equal to 7.

15. The method according to claim 1, further comprising:
sending receiving indication information to the terminal device, wherein the receiving indication information is configured to indicate whether the terminal device is to receive the target reference signal.

16. The method according to claim 15, wherein sending the receiving indication information to the terminal device comprises:
determining the layer-one signaling used for sending the receiving indication information;
sending the receiving indication information to the terminal device through the layer-one signaling.

17. The method according to claim 16, wherein determining the layer-one signaling used for sending the receiving indication information comprises:
determining, based on first information, the layer-one signaling used for sending the receiving indication information;
wherein, the first information comprises at least one of the following:
terminal capability information;
second information.

18. The method according to claim 17, wherein the second information comprises:
indication information of a sending method, wherein the indication information of the sending method is configured to indicate that the receiving indication information is sent to the terminal device through at least one of a paging early indication PEI and paging downlink control information DCI.

19. The method according to claim 17, wherein the terminal capability information is capability of whether the terminal device supports detection of the receiving indication information carried by at least one of the PEI and the paging DCI.

20. A resource configuration method performed by a terminal device, comprising:
receiving configuration indication information and/or resource configuration information of a target reference signal sent by a network device through system information block SIB messages;
wherein, the configuration indication information is configured to indicate a generation method of the resource configuration information of the target reference signal;
the resource configuration information comprises at least one of the following:
a first parameter set applied to a single target reference signal resource;
a second parameter set applied to each target reference signal resource in a target reference signal resource set;
a third parameter set applied to each target reference signal resource in each target reference signal resource set in a target reference signal resource set group.

21. The method according to claim 20, wherein the resource configuration information comprises:
configuration information generated using a first method; or
configuration information generated using a second method.

22. The method according to claim 21, wherein the configuration indication information is configured to indicate whether the resource configuration information is generated by using the first method or the second method.

23. The method according to claim 21, wherein when the resource configuration information is generated by using the first method, the resource configuration information satisfies one of the following:
there are simultaneously the first parameter set, the second parameter set, and the third parameter set;
there are simultaneously the second parameter set and the third parameter set; or
there is only the first parameter set and/or there are simultaneously the second parameter set and the third parameter set.

24. The method according to claim 20, wherein the target reference signal comprises: channel-state-information reference signal CSI-RS.

25. The method according to claim 24, wherein the CSI-RS is a channel tracking reference signal TRS.

26. The method according to claim 20, wherein the first parameter set comprises at least one of the following parameters:
scrambling identification of the target reference signal;
a validity duration of the target reference signal indicated based on layer-one signaling.

27. The method according to claim 20, wherein the second parameter set comprises at least one of the following parameters:
scrambling identification of the target reference signal;
periodicity and an offset value of the target reference signal;
quasi co-location QCL reference;
quantity of slots in which the target reference signal is located;
identification of the target reference signal resource set;
a validity duration of the target reference signal indicated based on layer-one signaling.

28. The method according to claim 27, wherein, the quantity of slots in which the target reference signal is located satisfies at least one of the following:
occupying 0 to 2 bits; or
indicating through an explicit or implicit manner.

29. The method according to claim 20, wherein the third parameter set comprises at least one of the following parameters:
periodicity and an offset value of the target reference signal;
a value of a frequency-domain starting resource block RB;
quantity of RBs occupied by a frequency domain;
a validity duration of the target reference signal indicated based on layer-one signaling;
quantity of slots in which the target reference signal is located;
a ratio of a power of each resource element in a non-zero power target reference signal to a power of each resource element in synchronization signal/physical broadcast channel block SS/PBCH block;
identification of the target reference signal resource set group.

30. The method according to claim 26, 27 or 29, wherein the validity duration of the target reference signal indicated based on the layer-one signaling satisfies at least one of the following:
a quantity of occupied bits is less than or equal to 4;
a maximum quantity is less than or equal to 16.

31. The method according to claim 20, wherein the target reference signal resource set group satisfies at least one of the following:
a maximum quantity is less than or equal to 6;
a quantity of occupied bits is less than or equal to 3.

32. The method according to claim 20, wherein the target reference signal resource set satisfies at least one of the following:
a maximum quantity is less than or equal to 128;
a quantity of occupied bits is less than or equal to 7.

33. The method according to claim 20, wherein the target reference signal resource satisfies at least one of the following:
a maximum quantity is less than or equal to 89;
a quantity of occupied bits is less than or equal to 7.

34. The method according to claim 20, further comprising:
receiving, from a network device, receiving indication information, wherein the receiving indication information is configured to indicate whether the terminal device is to receive the target reference signal;
when the receiving indication information indicates the terminal device to receive the target reference signal, receiving the target reference signal based on the resource configuration information of the target reference signal.

35. A network device, comprising:
a memory, a transceiver and a processor, wherein the memory is configured to store a computer program; the transceiver is configured to receive and send data under a control of the processor; the processor is configured to read the computer program in the memory and perform the following processes:
sending configuration indication information and/or resource configuration information of a target reference signal to a terminal device in an idle mode or an inactive mode by using system information block SIB messages through the transceiver;
wherein the configuration indication information is configured to indicate a generation method of the resource configuration information of the target reference signal;
the resource configuration information comprises at least one of the following:
a first parameter set applied to a single target reference signal resource;
a second parameter set applied to each target reference signal resource in a target reference signal resource set;
a third parameter set applied to each target reference signal resource in each target reference signal resource set in a target reference signal resource set group.

36. A terminal device, comprising:
a memory, a transceiver and a processor, wherein the memory is configured to store a computer program; the transceiver is configured to receive and send data under a control of the processor; the processor is configured to read the computer program in the memory and perform the following processes:
receiving configuration indication information and/or resource configuration information of a target reference signal sent by a network device using system information block SIB messages through transceiver;
wherein, the configuration indication information is configured to indicate a generation method of the resource configuration information of the target reference signal;
the resource configuration information comprises at least one of the following:
a first parameter set applied to a single target reference signal resource;
a second parameter set applied to each target reference signal resource in a target reference signal resource set;
a third parameter set applied to each target reference signal resource in each target reference signal resource set in a target reference signal resource set group.

37. A resource configuration apparatus applied to a network device, comprising:
a first sending unit, configured to send configuration indication information and/or resource configuration information of a target reference signal to a terminal device in an idle mode or an inactive mode, by using system information block SIB messages;
wherein, the configuration indication information is configured to indicate a generation method of the resource configuration information of the target reference signal;
the resource configuration information comprises at least one of the following:
a first parameter set applied to a single target reference signal resource;
a second parameter set applied to each target reference signal resource in a target reference signal resource set;
a third parameter set applied to each target reference signal resource in each target reference signal resource set in a target reference signal resource set group.

38. A resource configuration apparatus applied to a terminal device, comprising:
a first receiving unit, configured to receive configuration indication information and/or resource configuration information of a target reference signal sent by a network device through system information block SIB messages;
wherein, the configuration indication information is configured to indicate a generation method of resource configuration information of the target reference signal;
the resource configuration information comprises at least one of the following:
a first parameter set applied to a single target reference signal resource;
a second parameter set applied to each target reference signal resource in a target reference signal resource set;
a third parameter set applied to each target reference signal resource in each target reference signal resource set in a target reference signal resource set group.

39. A processor-readable storage medium, wherein the processor-readable storage medium stores a computer program, and the computer program is configured to cause a processor to perform the method according to any one of claims 1 to 34.
